# EUROPEAN PATENT SPECIFICATION

(11) **EP 4 354 399 B1**
(45) Date of publication and mention of the grant of the patent: **28.10.2026**
(21) Application number: 21946323.9
(22) Date of filing: 22.06.2021
(51) Int. Cl.: G06T 11/40, G06T 15/00

(54) **GRAPHICS RENDERING METHOD AND APPARATUS**
VERFAHREN UND VORRICHTUNG ZUR GRAFIKDARSTELLUNG
PROCÉDÉ ET APPAREIL DE RENDU GRAPHIQUE

(43) Date of publication of application: 17.04.2024
(73) Proprietor: Huawei Technologies Co., Ltd., Shenzhen, Guangdong 518129 (CN)
(72) Inventor: YANG, Xile, Shenzhen, Guangdong 518129 (CN); LAI, Siyan, Shenzhen, Guangdong 518129 (CN); WU, Renchu, Shenzhen, Guangdong 518129 (CN)
(74) Representative: Epping - Hermann - Fischer
(86) International application number: PCT/CN2021/101386
(87) International publication number: WO 2022/266821

(56) References cited:
- CN-A- 109 242 756
- CN-A- 109 325 899
- CN-A- 112 348 929
- US-A1- 2018 165 788
- US-A1- 2020 111 247
- US-B1- 7 385 609

## Description

### TECHNICAL FIELD

This application relates to the field of information technologies, and more specifically, to a graphics rendering method and apparatus.

### BACKGROUND

A tile-based rendering system of a computer graphics processing unit (GPU) divides a to-be-rendered image into many tiles. A rendering process includes: in a geometry processing stage, performing geometry processing including vertex shading on a series of primitives input by a graphics application, classifying the primitives into tiles of a rendered image based on a coverage relationship of the primitive to a screen; and then performing rendering processing on all the tiles in a raster processing stage, where rendering of a plurality of tiles may be performed concurrently in the GPU. In the tile-based rendering system of the GPU, primitive vertex data generated after the geometry processing stage cannot be directly used for rendering processing in the raster processing stage.

In a graphics rendering method currently provided, primitive vertex data generated in a geometry processing stage is stored in a GPU memory, and in a raster processing stage, the primitive vertex data is read from the GPU memory and used. In another graphics rendering method further provided, primitive vertex data generated in a geometry processing stage is not stored, and geometry processing is performed on a primitive again in a raster processing stage in a rendering processing procedure, and the primitive vertex data is generated by a vertex shader.

In the foregoing graphics rendering methods, graphics rendering is performed based on a fixed mode, which may increase a memory requirement of a GPU or increase a computation amount of a GPU, and affect rendering performance of the GPU. Therefore, how to ensure the rendering performance of the GPU in a graphics rendering process becomes an urgent problem to be resolved.

US 2018/165788 A1 discloses a method of graphics processing comprising: receiving, by a graphics processing unit (GPU), a GPU command packet that indicates the GPU may select a rendering mode from a plurality of rendering modes for rendering at least a portion of a frame, wherein the plurality of rendering modes comprises a first rendering mode and a second rendering mode; selecting, by the GPU, the first rendering mode from the plurality of rendering modes for rendering at least the portion of the frame based on a real-time GPU state of the GPU, and rendering, by the GPU, at least the portion of the frame using the selected first rendering mode.

### SUMMARY

This application provides a graphics rendering method, to improve performance of graphics rendering.

According to a first aspect, a graphics rendering method is provided and is applied to a tile-based rendering system of a computer graphics processing unit GPU. A rendering mode supported by the tile-based rendering system of the GPU includes a first rendering mode and a second rendering mode.

The method includes:
receiving a series of primitives from a graphics application, determining, based on a preset condition, to render the series of primitives by using the first rendering mode and/or the second rendering mode; and rendering the series of primitives based on the first rendering mode and/or the second rendering mode. The first rendering mode indicates to store, in a GPU memory, primitive vertex data generated by performing vertex shading processing in a geometry processing stage, and read the primitive vertex data from the GPU memory in a raster processing stage to perform rendering processing. The second rendering mode indicates that the primitive vertex data generated by performing vertex shading processing in the geometry processing stage is not stored in the GPU memory, vertex shading processing is performed in the raster processing stage to generate the primitive vertex data, and rendering processing is performed on the primitive vertex data.

According to the graphics rendering method provided in this embodiment of this application, the tile-based rendering system of the GPU can select, based on the preset condition, a specific mode for graphics rendering, to avoid impact on GPU rendering performance caused by graphics rendering based on a fixed mode.

The preset condition includes at least one of the following: a proportionality constant is greater than a first threshold, a complexity weighting coefficient of a vertex shader program is greater than a second threshold, a primitive weighting coefficient is greater than a third threshold, a storage resource weighting coefficient is greater than a fourth threshold, or a comprehensive weighting coefficient is greater than a fifth threshold. The proportion constant is a ratio of a quantity of execution times of the first rendering mode to a quantity of execution times of the second rendering mode. The complexity weighting coefficient of the vertex shader program is a weighted value of the following parameters of the vertex shader program: a quantity of instructions, a quantity of complex instructions, a quantity of memory read instructions, and a quantity of executable loop instructions. The primitive weighting coefficient is a weighted value of primitive coverage and a quantity of bytes of the primitive vertex data. The storage resource weighting coefficient is storage resource utilization of the GPU memory, and the comprehensive weighting coefficient is a weighting value of the proportionality constant, the complexity weighting coefficient of the vertex shader program, the primitive weighting coefficient, and the storage resource weighting coefficient.

Further, the preset condition further includes: a rendering scenario is a preset rendering scenario.

There may be a plurality of specific forms of the preset condition, that is, the tile-based rendering system of the GPU may determine, by using a plurality of different manners, a specific mode for graphics rendering. This can improve flexibility of the solution.

With reference to the first aspect, in some implementations of the first aspect, the method further includes: determine, based on the series of primitives, that the preset condition includes at least one of the following: the complexity weighting coefficient of the vertex shader program is greater than the second threshold, the primitive weighting coefficient is greater than the third threshold, or the storage resource weighting coefficient is greater than the fourth threshold. The vertex shader program bound to the series of primitives is used to determine the complexity weighting coefficient of the vertex shader program. The primitive coverage and the quantity of bytes of the primitive vertex data in the series of primitives are used to determine the primitive weighting coefficient. The storage resource utilization of the GPU memory is used to determine the storage resource weighting coefficient.

Alternatively,
the method further includes:
receiving the vertex shader program from the graphics application; and determining, based on the vertex shader program, that the preset condition includes that the complexity weighting coefficient of the vertex shader program is greater than the second threshold.

According to the graphics rendering method provided in this embodiment of this application, the tile-based rendering system of the GPU can determine the preset condition based on input primitive data, and determine the preset condition based on the input vertex shader program. This improves flexibility of the solution.

With reference to the first aspect, in some implementations of the first aspect, in the first rendering mode, the method further includes: generating primitive vertex position data based on a first vertex shader in the geometry processing stage, where the primitive vertex position data is used to remove a primitive that is invisible on a screen; and generating, based on a second vertex shader, primitive vertex attribute data corresponding to a primitive that is visible on the screen.

With reference to the first aspect, in some implementations of the first aspect, in the second rendering stage, the method further includes: generating primitive vertex position data based on a third vertex shader in the raster processing stage, where the primitive vertex position data is used to remove a primitive that is invisible on the screen; and generating, based on a fourth vertex shader, primitive vertex attribute data corresponding to a primitive that is visible on the screen. According to the graphics rendering method provided in this embodiment of this application, the vertex shader may be compiled into two independent programs: one vertex shader program specially used to generate the primitive vertex position data, and the other vertex shader program used to generate the primitive vertex attribute data. Both the quantity of instructions in the vertex shader program that generates the primitive vertex position data and amount of input and output data for executing the program usually reduce. Therefore, the vertex shader program may reduce a computation amount in a rendering process in a stage requiring the primitive vertex position data, improving performance of a GPU system.

According to a second aspect, a graphics rendering apparatus is provided. The apparatus includes modules corresponding to the method/operations/steps/actions described in the first aspect.

The foregoing apparatus may be a server, or may be an apparatus (for example, a chip, or an apparatus that can work together with a server) that is in the server and that is configured to perform graphics rendering.

The module included in the graphics rendering apparatus may be implemented by using a hardware circuit, software, or a combination of a hardware circuit and software.

According to a third aspect, a graphics rendering apparatus is provided. The apparatus includes a processor, and the processor is configured to invoke program code stored in a memory, to execute some or all operations in any one of the implementations of the first aspect.

In the foregoing apparatus, the memory storing the program code may be located inside the graphics rendering apparatus (in addition to the processor, the graphics rendering apparatus may further include the memory), or may be located outside the graphics rendering apparatus (which may be a memory of another device).

Optionally, the memory is a nonvolatile memory.

When the graphics rendering apparatus includes the processor and the memory, the processor and the memory may be coupled together.

According to a fourth aspect, a computer-readable storage medium is provided. The computer-readable storage medium stores program code, and the program code includes instructions used to execute some or all operations of the method described in the foregoing aspects.

Optionally, the computer-readable storage medium is located inside an electronic device, and the electronic device may be an apparatus that can perform graphics rendering.

According to a fifth aspect, an embodiment of this application provides a computer program product. When the computer program product runs on a communication apparatus, the communication apparatus is enabled to execute some or all operations of the method described in the foregoing aspects.

According to a sixth aspect, a chip is provided. The chip includes a processor, and the processor is configured to execute some or all operations of the method described in the foregoing aspects.

According to a seventh aspect, a system is provided, including the foregoing graphics application and the foregoing graphics rendering apparatus.

### BRIEF DESCRIPTION OF DRAWINGS

FIG. 1 is a system to which a graphics rendering method according to an embodiment of this application is applicable.
FIG. 2 is a schematic diagram of an electronic device according to this application;
FIG. 3 is a schematic flowchart of tile-based rendering of a GPU;
FIG. 4 is another schematic flowchart of tile-based rendering of a GPU;
FIG. 5 is a schematic flowchart of a graphics rendering method according to an embodiment of this application;
FIG. 6 is a schematic flowchart of determining a rendering mode according to an embodiment of this application;
FIG. 7 is another schematic flowchart of determining a rendering mode according to an embodiment of this application;
FIG. 8 is a schematic block diagram of a GPU system according to an embodiment of this application;
FIG. 9 is a schematic block diagram of a graphics rendering apparatus 900 according to an embodiment of this application; and
FIG. 10 is a schematic block diagram of a server 1000 according to an embodiment of this application.

### DESCRIPTION OF EMBODIMENTS

The following describes technical solutions of this application with reference to accompanying drawings.

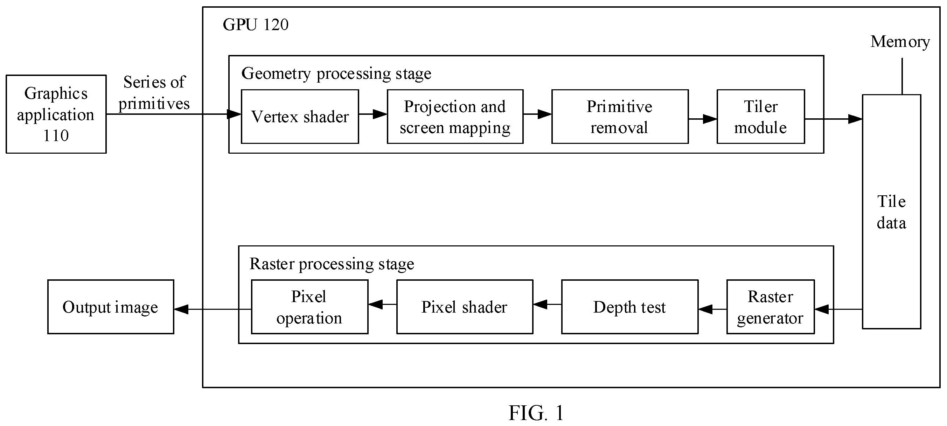

A graphics rendering method in an embodiment of this application may be applied to a system architecture shown in FIG. 1. FIG. 1 is a system to which a graphics rendering method according to an embodiment of this application is applicable.

As shown in FIG. 1, the system architecture may include a graphics application 110 and a GPU 120. The GPU 120 uses a three-dimensional model in the computer graphics application 110 (for example, a computer game) as input data, performs rendering processing on a primitive (for example, a triangle, a line, or a point) and vertex data (for example, vertex coordinates, a surface normal vector, an RGBA color, a secondary color, a color index, fog coordinates, texture coordinates, and a boundary mark of a polygon) in the three-dimensional model, and finally generates a corresponding output image.

For example, a GPU rendering process is mainly divided into two stages: a geometry processing stage and a raster processing stage.

Main modules in the geometry processing stage are as follows:
(1) Vertex shader: The vertex shader is a first stage in a GPU rendering process and is also a programmable processor. The GPU reads vertex data that describes an appearance of a three-dimensional graphic, determines a shape and a position relationship of the three-dimensional graphic by executing a vertex shader program provided by the graphics application, and establishes a framework of the three-dimensional graphic.
(2) Projection and screen mapping: The GPU maps the three-dimensional graphic generated by the vertex shader from three-dimensional space to a two-dimensional plane of a screen.
(3) Primitive removal: After the GPU maps the three-dimensional graphic from the three-dimensional space to the two-dimensional plane of the screen, some primitives may not appear on the two-dimensional plane of the screen due to a specific reason. Removing these primitives in the GPU rendering process does not affect the output image of rendering, but further improves performance of a GPU system.
   For example, neither a primitive on the back of a three-dimensional object nor a primitive covered by another object is displayed on the two-dimensional plane of the screen. For another example, some small triangles may not cover any pixel sampling point, and therefore are not displayed on the two-dimensional plane of the screen.
(4) Tiler: In a tile-based rendering system of the GPU, the tiler distributes geometrically processed primitives to corresponding tiles on the screen based on coordinates of the geometrically processed primitive projected on the two-dimensional screen, to perform tile-based rendering in the rendering process.

Main modules in the raster processing stage are as follows:
(1) Raster generator: In the tile-based rendering system of the GPU, the raster processing stage is separately performed on the tiles on the screen. The raster generator reads primitive vertex data of a primitive in a current tile based on tile information generated in the geometry processing stage. Based on the primitives on the two-dimensional plane of the screen that are generated in the geometry processing stage, the raster generator generates corresponding pixels indicating the primitives. In the raster processing stage of the GPU, the pixels on the two-dimensional planes of the screens are further processed.
(2) Depth test: In a depth test stage, the depth test is performed by comparing the pixels of the primitives generated by the raster generator with background depth, to remove a pixel of a primitive that is blocked on the screen. Through the depth test, the GPU can reduce further processing on a pixel that is invisible on the screen.
(3) Pixel shader: The pixel shader is a programmable processor other than the vertex shader in a GPU process. The pixel shader determines a color of each pixel indicating the three-dimensional graphic by executing a pixel shader instruction provided by the graphics application.
(4) Pixel operation: After the color indicating each pixel of the three-dimensional graphic is generated by the pixel shader, further operation may be performed on the colors of the pixels in the GPU process, for example, pixel merging, mixing, and a transparency test. The GPU outputs a final rendered image after the pixel operation is complete.

In embodiments of this application, a graphics rendering method may be performed by an electronic device. The electronic device may be a mobile terminal (for example, a smartphone), a computer, a personal digital assistant, a wearable device, a vehicle-mounted device, an internet of things device, or another device that can perform graphics rendering processing. The electronic device may be a device that runs an Android system, an iOS system, a Windows system, or another system.

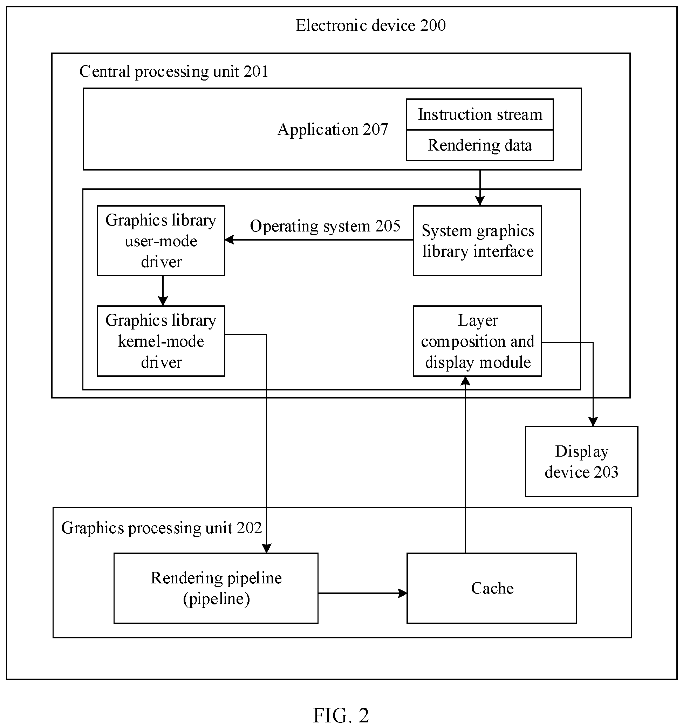

The following describes a specific structure of the electronic device in detail with reference to FIG. 2. FIG. 2 is a schematic diagram of the electronic device according to this application. The electronic device shown in FIG. 2 may be an electronic device 200 including the system architecture shown in FIG. 1.

In an embodiment, as shown in FIG. 2, the electronic device 200 may include a central processing unit (CPU) 201, a graphics processing unit (GPU) 202, a display device 203, and a memory 204. Optionally, the electronic device 200 may further include at least one communication bus 210 (not shown in FIG. 2), configured to implement connection and communication between the components.

It should be understood that the components in the electronic device 200 may alternatively be mutually coupled by using another connector, and the another connector may include various interfaces, transmission lines, buses, or the like. Alternatively, the components in the electronic device 200 may be radioactively connected with the processing unit 201 as a center. In embodiments of this application, coupling is mutual electrical connection or communication, including direct connection or indirect connection performed by using another device.

The central processing unit 201 and the graphics processing unit 202 may also be connected in a plurality of manners, and are not limited to being connected in the manner shown in FIG. 2. The central processing unit 201 and the graphics processing unit 202 in the electronic device 200 may be located on a same chip, or each may be an independent chip. The following briefly describes functions of the central processing unit 201, the graphics processing unit 202, and the display device 203.

Central processing unit 201: configured to run an operating system 205 and an application 207. The application 207 may be a graphical application, such as a game or a video player. The operating system 205 provides a system graphics library interface. The application 207 may receive, through the system graphics library interface, an instruction stream (for example, a rendering instruction) that is sent by a server and that is used to render a graphic or image frame. A driver, for example, a graphics library user-mode driver and/or a graphics library kernel-mode driver, provided by the operating system 205, generates an instruction stream that can be identified by a rendering pipeline of the graphics processing unit 202 and required related rendering data. A system graphics library includes but is not limited to: an open graphics library for embedded system (open graphics library for embedded system, OpenGL ES), the khronos platform graphics interface (the khronos platform graphics interface), or Vulkan (a cross-platform drawing application interface). The instruction stream includes a series of instructions, and these instructions are usually instructions for calling the system graphics library interface.

Optionally, the central processing unit 201 may include at least one of the following types of processors: an application processor, one or more microprocessors, a digital signal processor (digital signal processor, DSP), a microcontroller (microcontroller unit, MCU), an artificial intelligence processor, or the like.

The central processing unit 201 may further include a necessary hardware accelerator, such as an application-specific integrated circuit (application specific integrated circuit, ASIC), a field programmable gate array (field programmable gate array, FPGA), or an integrated circuit configured to implement a logical operation. The processing unit 201 may be coupled to one or more data buses, to transmit data and instructions between the components in the electronic device 200.

Graphics processing unit 202: configured to receive a graphics instruction stream sent by the processing unit 201, generate a rendering target by using the rendering pipeline (pipeline), and display the rendering target on the display device 203 by using a layer composition and display module in the operating system.

Optionally, the graphics processing unit 202 may include a general-purpose graphics processing unit that executes software, such as the GPU or another type of dedicated graphics processing unit.

Display device 203: configured to display various images generated by the electronic device 200. The image may be image data (including a still image and a video data) processed by a graphical user interface (graphical user interface, GUI) or the graphics processing unit 202 in the operating system.

Optionally, the display device 203 may include any suitable type of display screen, like a liquid crystal display (liquid crystal display, LCD), a plasma display, or an organic light-emitting diode (organic light-emitting diode, OLED) display.

The rendering pipeline is a series of operations sequentially performed by the graphics processing unit 202 in a process of rendering the graphic or image frame. Typical operations include vertex processing (vertex processing), primitive processing (primitive processing), rasterization (rasterization), fragment processing (fragment processing), and the like.

The foregoing describes the system architecture to which an embodiment of this application is applicable and a procedure of performing graphics rendering inside the electronic device.

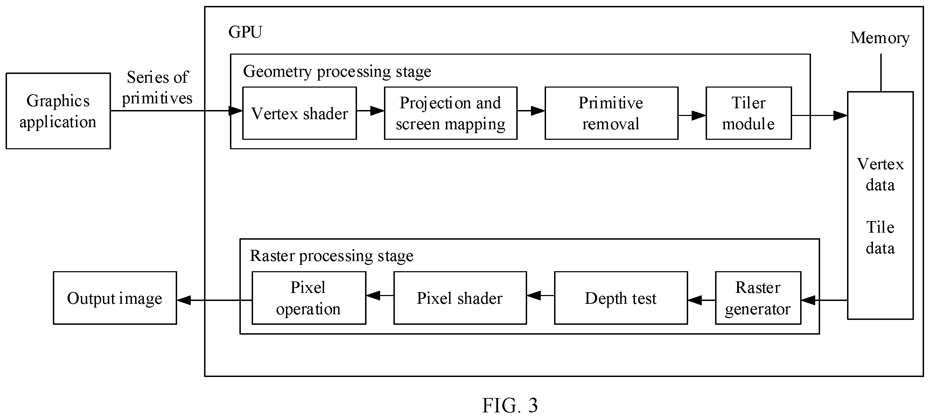

It can be learned from the architecture of the foregoing tile-based rendering system of the GPU shown in FIG. 1 that the primitive vertex data generated after the geometry processing stage cannot be directly used for second-stage rendering processing. One solution is to perform geometry processing on the primitive vertex data generated by the vertex shader in the geometry processing stage, and then store the processed data in the GPU memory for reading in the second-stage rendering processing procedure. FIG. 3 is a schematic flowchart of tile-based rendering of a GPU.

It can be learned from FIG. 3 that, in a geometry processing stage, vertex shader processing, and projection and screen mapping processing are performed on a primitive input by a graphics application, to generate coordinates of the primitive on a screen. A primitive that is invisible on the screen is removed in a primitive removal stage. Remaining primitives are distributed to tiles on the screen by a tiler, and tile data of the primitives is stored in a GPU memory. In addition, vertex data of the remaining primitives is also stored in the GPU memory after the primitive is removed.

In a rendering stage, a raster generator reads primitive tile data that belongs to a current tile from the GPU memory, and reads primitive vertex data from the memory. The primitive vertex data that belongs to the tile is used in the GPU rendering stage, to further generate an output image of the tile.

Although the solution shown in FIG. 3 can avoid repeatedly executing a vertex shader in the rendering stage to generate the primitive vertex data, storing the primitive vertex data generated by the vertex shader increases a memory requirement of the GPU, and reading and writing the primitive vertex data usually increases bandwidth of the GPU. In particular, when memory and bandwidth resources of the GPU are limited, storing a large amount of primitive vertex data after geometry processing may affect overall performance of the GPU.

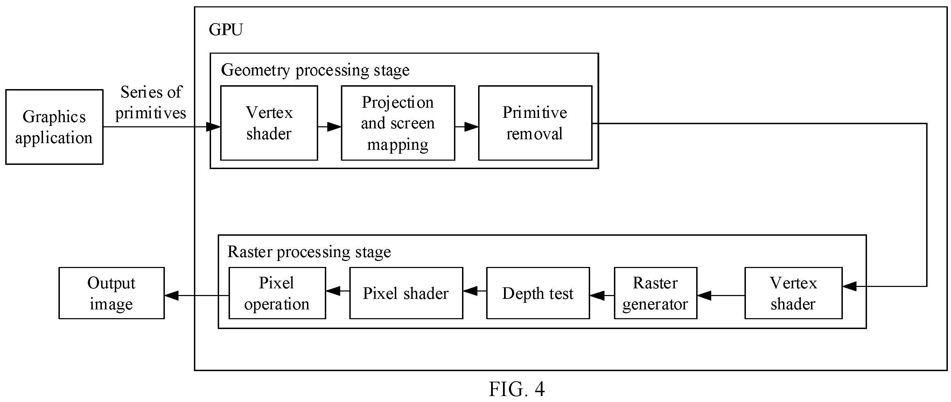

Another solution is to perform geometry processing on a primitive again in a second-stage rendering processing procedure, and generate primitive vertex data by using a vertex shader. FIG. 4 is another schematic flowchart of tile-based rendering of a GPU.

It can be learned from FIG. 4 that, in a geometry processing stage, vertex shader processing, and projection and screen mapping processing are performed on a primitive input by a graphics application, to generate coordinates of the primitive on a screen. A primitive that is invisible on the screen is removed in a primitive removal stage. Remaining primitives are sent to a second stage for rendering processing. Primitive vertex data is not stored in a GPU memory after the primitive removal stage.

In a rendering stage, the primitive obtained through geometry processing is processed by the vertex shader again, to regenerate coordinates of a primitive vertex on the screen. The regenerated primitive vertex data is used in a raster generator for rasterization processing, and is further used in the entire GPU rendering stage to generate an output image.

In the solution shown in FIG. 4, in the GPU rendering stage, the vertex shader needs to perform processing again, to re-generate the primitive vertex data. Repeated execution of the vertex shader in the rendering stage increases a computation amount of the GPU, and further affects rendering performance of the GPU. In the geometry processing stage, a simplified vertex shader may be executed to generate vertex position data required in the geometry processing stage, and in the rendering stage, the complete vertex shader is executed to generate all primitive vertex data. Even if this optimization measure is applied, impact of repeated execution of the vertex shader on the computation amount and the rendering performance of the GPU in a complex vertex shader computing scenario cannot be ignored.

To resolve the existing problem in current tile-based rendering of the GPU, this application provides a graphics rendering method. Different rendering modes are selected, to reduce a requirement for both a memory and bandwidth of a GPU and a computation amount of a vertex shader. This improves overall performance of a tile-based rendering system of the GPU.

For ease of understanding of this embodiment of this application, several basic concepts in this embodiment of this application are briefly described. It should be understood that the basic concepts described below are briefly described by using an example recorded in a current conventional technology. Specific names are not limited in this application.

### 1. Rendering (Render).

Rendering is a stage in which an image finally conforms to a three-dimensional (three dimensions, 3D) scenario. There are a plurality of types of rendering software, such as rendering engines of various computer graphics (computer graphics, CG) software, and RenderMan. Rending is a process in architectural design, animation production, and the like, in which a model and an animation frame are created using software such as 3DS Max and Maya, and design content is used to produce a final effect drawing or animation using the software or auxiliary software (such as lightscape and vray).

### 2. Tile-based rendering.

In a tile-based rendering architecture, rasterization is performed on each tile, which is a main difference from a conventional immediate rendering structure. To implement this purpose, after geometric transformation and cropping, each of all to-be-drawn primitives need to be temporarily stored in a system memory based on a tile in which the primitive is located. Once primitives of one frame are stored, rendering may be performed tile by tile based on a tile sequence, and traditional read-modify-write operations for a color buffer, a depth buffer, and a template buffer can be performed on a small on-chip memory without repeated access to a system memory. After all primitives in one tile are rendered, content of an on-chip memory of the tile can be written to the memory at once (generally, only content of the color buffer need to be written back). This architecture can greatly reduce a quantity of access times, improve drawing efficiency, and reduce power consumption.

### 3. Vertex shading.

Vertex shading is a rendering method. In vertex shading, information such as a three-dimensional position, a color, and a direction of a vertex can be accessed. These values can be modified, or be transferred to a fragment shading stage, to implement specific rendering effect.

### 4. Primitive.

The primitive is a basic graphical element. The basic graphical element is a basic graphic entity for constructing a complex geometrical graphic and frame. Different graphics systems have different graphic elements. The basic graphical element is a point, a line, a triangle, a mesh, and the like. A graphic displayed on a raster scan display is a set of pixels with one or more colors. A process of determining a set of pixels of a graphic of best approximation and writing pixels with a specified attribute is called scan conversion or generation of the graphic.

### 5. Series of primitives.

The series of primitives in this application includes at least one primitive.

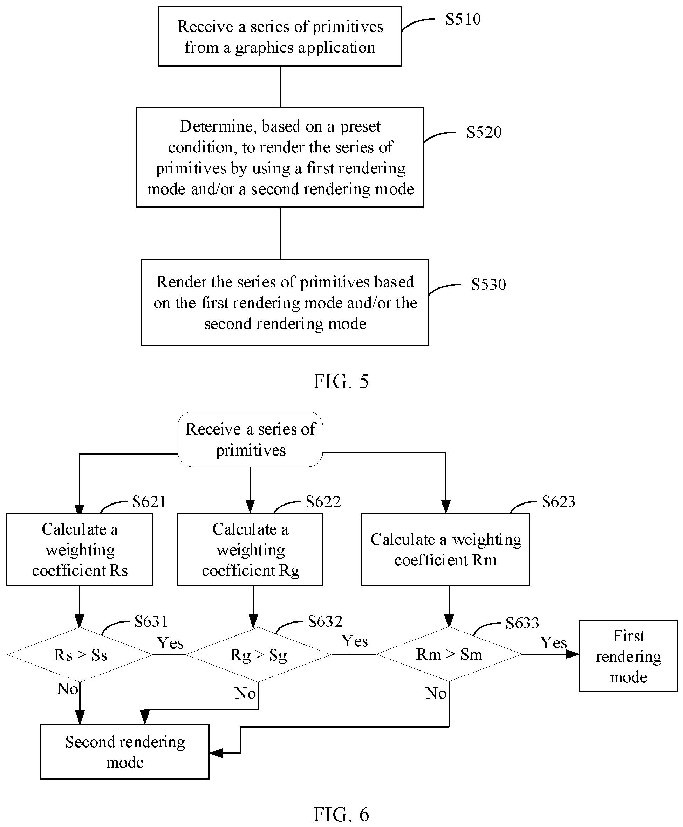

The following describes a graphics rendering method in an embodiment of this application in detail with reference to FIG. 5.

FIG. 5 is a schematic flowchart of a graphics rendering method according to an embodiment of this application. The graphics rendering method is applied to a tile-based rendering system of a GPU (the system shown in FIG. 1). A rendering mode supported by the tile-based rendering system of the GPU includes a first rendering mode and a second rendering mode. It may be understood that the rendering mode supported by the tile-based rendering system of the GPU in this embodiment of this application is not a fixed specific rendering mode, and can support two different rendering modes for graphics rendering processing.

In the first rendering mode, primitive vertex data generated by a series of primitives in a geometry processing stage that are input by a graphics application is stored in a GPU memory, the primitive vertex data is read from the memory to perform rendering in a raster processing stage, and an output image is generated (for example, the rendering manner shown in FIG. 3). In the second rendering mode, the primitive vertex data generated by the series of primitives in the geometry processing stage that are input by the graphics application is not stored in the GPU memory, vertex shading processing is performed on the primitives obtained after the geometry processing stage in the raster processing stage to generate the primitive vertex data. The primitive vertex data is used for rendering to generate an output image (for example, the rendering manner shown in FIG. 4).

For example, in the first rendering mode, the series of primitives only needs to be processed by a vertex shader in the geometry processing stage, and does not need to be processed by the vertex shader again in the raster processing stage. In the second rendering mode, after the series of primitives is processed by the vertex shader in the geometry processing stage, the series of primitives further needs to be processed by the vertex shader again in the raster processing stage. From a perspective of an execution mode of the vertex shader, the first rendering mode may be referred to as a single execution mode, and the second rendering mode may be referred to as a repeated execution mode.

It should be understood that the foregoing "first rendering mode" and "second rendering mode", or the "single execution mode" and the "repeated execution mode" are only intended to distinguish between different rendering modes supported by the tile-based rendering system of the GPU in this embodiment of this application, and do not constitute any limitation on the protection scope of this application. The rendering modes may be distinguished by using other names. Examples are not described herein again. For example, a "storage mode" and a "non-storage mode" may also be used to distinguish between the rendering modes. A mode in which the primitive vertex data generated in the geometry processing stage is stored is referred to as the storage mode, and a mode in which the primitive vertex data generated in the geometry processing stage is not stored is referred to as the non-storage mode.

The method includes the following steps.

S510: Receive the series of primitives from the graphics application.

In this embodiment of this application, how the tile-based rendering system of the GPU receives the series of primitives input by the graphics application is not limited. For details, refer to descriptions in a current conventional technology.

For example, the graphics application in this embodiment of this application may be the graphics application 110 shown in FIG. 1, and the series of primitives input by the graphics application may be some primitives in a to-be-rendered graphic in the graphics application 110.

In a possible implementation, the graphics application may input primitives in the to-be-rendered graphic into the tile-based rendering system of the GPU in batches, and the tile-based rendering system of the GPU performs processing. A primitive that is input by the graphics application to the tile-based rendering system of the GPU each time is referred to as the series of primitives. The series of primitives in the following may also be referred to as primitive data, or referred to as a series of primitive input, or referred to as a primitive sequence, or the like.

It should be understood that the names such as the series of primitives, the series of primitive input, or the primitive sequence are only examples, and do not constitute any limitation on the protection scope of this application. In this embodiment of this application, a specific name of the to-be-processed primitive that is input by the graphics application to the tile-based rendering system of the GPU is not limited. For details, refer to descriptions in the current conventional technology.

Further, after receiving the series of primitives input by the graphics application, the tile-based rendering system of the GPU needs to perform rendering processing on the series of primitives, to produce a corresponding output picture. In this embodiment of this application, before performing rendering processing on the series of primitives, the tile-based rendering system of the GPU needs to determine a rendering mode. A method procedure shown in FIG. 5 further includes the following step:
S520: Determine, based on a preset condition, to render the series of primitives by using the first rendering mode and/or the second rendering mode.

In this embodiment of this application, when performing rendering, the tile-based rendering system of the GPU can determine, based on the preset condition, to use a more appropriate rendering mode to render the series of primitives, avoiding impact on GPU rendering performance by using a fixed rendering mode (for example, fixed use of the mode shown in FIG. 3 may increase a memory requirement of the GPU, and fixed use of the mode shown in FIG. 4 may increase a computation amount of the GPU).

In a possible implementation, it may be determined, based on the preset condition, to render the series of primitives by using the first rendering mode.

In another possible implementation, it may be determined, based on the preset condition, to render the series of primitives by using the second rendering mode.

In still another possible implementation, it may be determined, based on the preset condition, to render the series of primitives by using the first rendering mode and the second rendering mode. For example, some of the input series of primitives are rendered by using the first rendering mode, and other primitives are rendered by using the second rendering mode.

It can be learned from the foregoing that, according to the graphics rendering method provided in this embodiment of this application, in a rendering process, a rendering mode appropriate for a current series of primitives is selected from a plurality of rendering modes supported by the tile-based rendering system of the GPU. This improves overall performance of the tile-based rendering system of the GPU.

Specifically, after determining a to-be-used rendering mode based on the preset condition, the tile-based rendering system of the GPU can perform primitive rendering based on the determined rendering mode. The method procedure shown in FIG. 5 further includes the following step:
S530: Render the series of primitives based on the first rendering mode and/or the second rendering mode.

It should be understood that a specific process of performing rendering by the tile-based rendering system of the GPU is not limited in this embodiment of this application. For example, when the first rendering mode is determined for rendering, for a specific rendering process, refer to the rendering process shown in FIG. 3. For another example, when the second rendering mode is determined for rendering, refer to the rendering process shown in FIG. 4. For another example, when both the first rendering mode and the second rendering mode are determined for rendering, for a specific rendering process of a primitive using the first rendering mode, refer to the rendering process shown in FIG. 3, and for a specific rendering process of a primitive using the second rendering mode, refer to the rendering process shown in FIG. 4.

For example, the preset condition in this embodiment of this application includes at least one of the following: a proportionality constant is greater than a first threshold, a complexity weighting coefficient of a vertex shader program is greater than a second threshold, a primitive weighting coefficient is greater than a third threshold, a storage resource weighting coefficient is greater than a fourth threshold, or a comprehensive weighting coefficient is greater than a fifth threshold.

It should be understood that the foregoing preset condition is only examples of possible forms of the preset condition, and does not constitute any limitation on the protection scope of this application. Another preset condition may be further set to select the first rendering mode and/or the second rendering mode. For example, random selection is performed. For another example, a historical rendering record is used. Examples are not described herein again.

For ease of understanding, the following separately describes the foregoing several preset conditions.

### (1) The proportionality constant is greater than the first threshold.

The proportion constant is a ratio of a quantity of execution times of the first rendering mode to a quantity of execution times of the second rendering mode, and is denoted as Rc:
Rc = single_mode_countlrepeat_mode_count. single_mode_count indicates a quantity of execution times of a first rendering mode, and repeat_mode_count indicates a quantity of execution times of a second rendering mode.

The first rendering mode similar to the rendering mode shown in FIG. 3 may be referred to as the single execution mode, and the second rendering mode similar to the rendering mode shown in FIG. 4 may be referred to as the repeated execution mode.

That the proportion constant is greater than the first threshold indicates that the ratio of the quantity of execution times of the first rendering mode to the quantity of execution times of the second rendering mode is less than a specific preset threshold. For example, if the first threshold is less than 1, it indicates that the quantity of execution times of the first rendering mode is less than the quantity of execution times of the second rendering mode.

For example, when the proportion constant is greater than the first threshold, it is determined to use the first rendering mode. Alternatively, when the proportion constant is not greater than the first threshold, it is determined to use the second rendering mode, or use both the first rendering mode and the second rendering mode.

For example, when the proportion constant is greater than the first threshold, it is determined to use the second rendering mode. Alternatively, when the proportion constant is not greater than the first threshold, it is determined to use the first rendering mode, or use both the first rendering mode and the second rendering mode.

### (2) The complexity weighting coefficient of the vertex shader program is greater than the second threshold.

The complexity weighting coefficient of the vertex shader program is a weighted value of the following parameters of the vertex shader program: a quantity of instructions, a quantity of complex instructions, a quantity of memory read instructions, and a quantity of executable loop instructions.

A main weakness of the second rendering mode is that a quantity of executions of the vertex shader is increased, affecting GPU performance in the rendering process. Different weighting coefficients may be used to describe complexity of the vertex shader program, consequently determining whether to select the second rendering mode. The following factors may be considered as the complexity weighting coefficient of the following parameters of the vertex shader program: the quantity of instructions, the quantity of complex instructions (for example, log, and square root), the quantity of memory read instructions (for example, texture read), and the quantity of executable loop instructions. For example, the complexity weighting coefficient Rs of vertex shader program may be defined as: $Rs = k 1 * inst_count + k 2 * complex_count + k 3 * texture_count + k 4 * loop_count$ inst_count indicates a total quantity of instructions of a vertex shader program; complex_count indicates a quantity of complex instructions of the vertex shader program; texture_count indicates a quantity of memory read instructions of the vertex shader program; loop_count indicates a quantity of loop instructions of the vertex shader program; and k1, k2, k3, and k4 are weighting coefficients corresponding to quantities of instructions.

In a possible implementation, the weighting coefficients corresponding to the quantities of instructions may be determined and adjusted based on experimental data, to implement optimal effect.

In another possible implementation, the weighting coefficients corresponding to the quantities of instructions may alternatively be adjusted based on a design of a GPU system. For example, if k4 = 0, it indicates that impact of a loop instruction on the complexity of the vertex shader program is not considered in the weighting coefficients.

For example, when the complexity weighting coefficient of the vertex shader program is greater than the second threshold, it is determined to use the first rendering mode. Alternatively, when the complexity weighting coefficient of the vertex shader program is not greater than the second threshold, it is determined to use the second rendering mode, or use both the first rendering mode and the second rendering mode.

For example, when the complexity weighting coefficient of the vertex shader program is greater than the second threshold, it is determined to use the second rendering mode. Alternatively, when the complexity weighting coefficient of the vertex shader program is not greater than the second threshold, it is determined to use the first rendering mode, or use both the first rendering mode and the second rendering mode.

The foregoing weighting coefficient used to describe the complexity of the vertex shader program may be generated in a compilation process of the vertex shader. In this case, a rendering mode can be selected based on a feature of the vertex shader program.

For a vertex shader program with high complexity and a large Rs coefficient, the first rendering mode should be usually used, that is, primitive vertex data generated in a geometry processing stage is stored in a GPU memory, and the primitive vertex data in the memory is read in a raster processing stage, reducing a workload of repeatedly executing a complex vertex shader program.

For a vertex shader program with low complexity and small Rs, the second rendering mode may be used, that is, a simple vertex shader program is repeatedly executed in the raster processing stage to regenerate the primitive vertex data. The primitive vertex data generated in the geometry processing stage does not need to be stored in the GPU memory, reducing requirements on both memory space and bandwidth of the GPU.

Further, for impact of the complexity of the vertex shader program on the rendering mode, this application provides another reference factor, namely, a ratio of a computation amount of the vertex shader to a computation amount of a pixel shader. Because a primitive on a screen usually includes a plurality of pixels, the computation amount of the pixel shader with a pixel as a granularity in the raster processing stage is much greater than the computation amount of the vertex shader with a primitive vertex as a granularity in the geometry processing stage.

In a special case, the computation amount of the vertex shader in the geometry processing stage may be greater than the computation amount of the pixel shader in the raster processing stage in the tile-based rendering system of the GPU.

For example, a pixel shader program may be extremely simple, while the vertex shader program may be relatively complex. In this special case, the first rendering mode should not be selected, avoiding increasing a workload of the vertex shader. In the geometry processing stage, a simplified vertex shader program is executed to generate primitive vertex position data, which is used for geometry processing and tile-based processing of the primitive. In the raster processing stage, the vertex shader program is re-executed to generate the primitive vertex data.

### (3) The primitive weighting coefficient is greater than the third threshold.

The primitive weighting coefficient is a weighted value of primitive coverage and a quantity of bytes of the primitive vertex data.

In the tile-based rendering system of the GPU, the primitive obtained after the geometry processing stage is distributed to the screen by a tiler.

In the raster processing stage in a rendering process, each tile covered by each primitive is separately processed on the screen. If the vertex shader is executed in the second rendering mode, in the rendering process of each tile, the vertex shader program is executed again on the primitive to generate the primitive vertex data. For primitives that cover a plurality of tiles on the screen, the vertex shader program may need to be repeatedly executed in a tile covered by each primitive. Repeated execution of the vertex shader program may further increase the workload of the vertex shader, affecting performance of the tile-based rendering system of the GPU.

Another primitive feature that may affect rendering mode selection is a size of the primitive vertex data. The quantity of bytes of the primitive vertex data may range from 16 to 512 in the rendering process. For a same quantity of primitive vertex data, by using the first rendering mode, a series of primitives that stores a large quantity of bytes of the primitive vertex data requires more memory space and bandwidth of the GPU. Therefore, the second rendering mode is appropriate for the series of primitives with the large quantity of bytes of the primitive vertex data.

A primitive geometric weighting method proposed in this application uses a primitive geometric feature to help select a more optimized rendering mode. For example, for one specific series of primitives, the primitive weighting coefficient Rg may be defined as follows: $Rg = k 1 * \left(tiles/primitives\right) + k 2 * \left(vertices*\left(max_size-vertex_size\right)\right)$

Tiles indicates a total quantity of tiles covered by a series of primitives on a screen; primitives indicates a total quantity of primitives in the series of primitives; vertices indicates a total quantity of primitive vertices of the series of primitives; vertex_size indicates a quantity of bytes of the primitive vertices of the series of primitives; and max_size indicates a maximum quantity of bytes of primitive vertex data, for example, 512 bytes. k1 and k2 are weighting coefficients corresponding to both primitive coverage and a quantity of bytes of the primitive vertex data.

In a possible implementation, the weighting coefficients k1 and k2 may be determined and adjusted based on experimental data, to implement optimal effect.

In another possible implementation, the weighting coefficients k1 and k2 may alternatively be adjusted based on the design of the GPU system. For example, if k2 = 0, it indicates that impact of the quantity of bytes of the primitive vertex data on the rendering mode is not considered in the weighting coefficient.

For example, when the primitive weighting coefficient is greater than the third threshold, it is determined to use the first rendering mode. Alternatively, when the primitive weighting coefficient is not greater than the third threshold, it is determined to use the second rendering mode, or use both the first rendering mode and the second rendering mode. For example, when the primitive weighting coefficient is greater than the third threshold, it is determined to use the second rendering mode. Alternatively, when the primitive weighting coefficient is not greater than the third threshold, it is determined to use the first rendering mode, or use both the first rendering mode and the second rendering mode. The foregoing primitive weighting coefficient Rg of the series of primitives may be used to select the rendering mode of the series of primitives. For a series of primitives with a large primitive weighting coefficient Rg, the first rendering mode should be used, that is, the primitive vertex data generated in the geometry processing stage is stored in the GPU memory, and the primitive vertex data in the memory is read in the raster processing stage. The first rendering mode is used. This reduces a workload of repeatedly executing the vertex shader program for a primitive with a high tile coverage rate. Storing vertex data with a small quantity of bytes of the primitive vertex data does not cause a large additional requirement on the memory space and bandwidth of the GPU.

For a series of primitives with a small primitive weighting coefficient Rg, the second rendering mode may be used, that is, the vertex shader program is repeatedly executed in the raster processing stage to regenerate the primitive vertex data. The primitive vertex data generated in the geometry processing stage does not need to be stored in the GPU memory, avoiding an additional requirement on the memory space and bandwidth of the GPU caused by storing vertex data with a large quantity of bytes of the primitive vertex data. The vertex shader program is repeatedly executed for a primitive with a low tile coverage rate, an increased execution workload of the vertex shader is also controlled within an acceptable range.

### (4) The storage resource weighting coefficient is greater than the fourth threshold.

The storage resource weighting coefficient is storage resource utilization of the GPU memory.

In the first rendering mode in the tile-based rendering system of the GPU, the vertex data generated by the vertex shader in the geometry processing stage is stored in the GPU memory for reading in the raster processing stage in the rendering process. The first rendering mode of the vertex shader may avoid repeatedly executing the vertex shader program in the raster processing stage to generate the primitive vertex data required in the rendering process, but this mode needs to occupy the storage space of the GPU memory. A storage resource of the GPU memory is usually limited. When the utilization of the GPU memory reaches a limit, the first rendering mode should not be selected as the rendering mode.

In a storage resource weighting method provided in this application, the storage resource utilization of the GPU memory is used to help select a more optimized rendering mode. For example, the storage resource weighting coefficient Rm may be defined as: $Rm = \left(free_space/total_space\right)$ free_space indicates available storage space in a GPU memory, and total_space indicates a total storage space in the GPU memory.

If the storage resource weighting coefficient Rm is large, there is a plenty of available storage space in the GPU memory, and the first rendering mode may be selected as the rendering mode. If the storage resource weighting coefficient Rm is small, there is limited available storage space in the GPU memory, and the second rendering mode should be selected as the rendering mode.

For example, when the storage resource weighting coefficient is greater than the fourth threshold, it is determined to use the first rendering mode. Alternatively, when the storage resource weighting coefficient is not greater than the fourth threshold, it is determined to use the second rendering mode, or use both the first rendering mode and the second rendering mode.

### (5) The comprehensive weighting coefficient is greater than the fifth threshold.

The comprehensive weighting coefficient is a weighting value of the proportionality constant, the complexity weighting coefficient of the vertex shader program, the primitive weighting coefficient, and the storage resource weighting coefficient.

This application proposes that the foregoing method for selecting a plurality of execution modes of the vertex shader, the vertex shader weighting method, the primitive geometric weighting method, and the storage resource weighting method may be combined to form a comprehensive weighting method, to select the rendering mode more effectively. For example, the comprehensive weighting coefficient R may be defined as: $R = k 1 * Rs + k 2 * Rg + k 3 * Rm$

Rs indicates a weighting coefficient of a vertex shader weighting method; Rg indicates a weighting coefficient of a primitive geometric weighting method; Rm indicates a weighting coefficient of a storage resource weighting method; and k1, k2, and k3 are weighting coefficients corresponding to weighting methods in the comprehensive weighting coefficient R.

In a possible implementation, the weighting coefficients k1, k2, and k3 corresponding to the weighting methods may be determined and adjusted based on experimental data, to implement optimal effect.

In another possible implementation, the weighting coefficients corresponding to the weighting methods may alternatively be adjusted based on the design of the GPU system. For example, if k3 = 0, it indicates that impact of a storage resource on the rendering mode is not considered in the comprehensive weighting coefficient R.

Usually, if the comprehensive weighting coefficient R is large, the first rendering mode of the vertex shader should be used, that is, the primitive vertex data generated in the geometry processing stage is stored in the GPU memory, and the primitive vertex data in the memory is read in the raster processing stage. The first rendering mode may reduce a workload of repeatedly executing a complex vertex shader program, and reduce a workload of repeatedly executing the vertex shader program for the primitive with the high screen tile coverage rate. In addition, if the comprehensive weighting coefficient R is large, it also means that the GPU memory has a plenty of available storage space. Therefore, storage of the primitive vertex data is not affected.

If the comprehensive weighting coefficient R is small, the second rendering mode of the vertex shader may be used, that is, the vertex shader program is repeatedly executed in the raster processing stage to regenerate the primitive vertex data. In the second rendering mode, the primitive vertex data generated in the geometry processing stage does not need to be stored in the GPU memory, reducing requirements on both the memory space and bandwidth of the GPU. In addition, if the comprehensive weighting coefficient R is small, it also means that the vertex shader program is of low complexity and a primitive tile coverage rate is low. Therefore, an additional workload caused by repeated execution of the vertex shader program does not affect performance of the tile-based rendering system of the GPU greatly.

For example, when the comprehensive weighting coefficient is greater than the fifth threshold, it is determined to use the first rendering mode. Alternatively, when the comprehensive weighting coefficient is not greater than the fifth threshold, it is determined to use the second rendering mode, or use both the first rendering mode and the second rendering mode.

### (6) The rendering scenario is a preset rendering scenario.

According to a rendering scenario control method for selecting the rendering mode provided in this application, a rendering scenario of the graphics application may be used as a granularity to control rendering mode selection. The rendering mode is selected once in the rendering scenario by using the rendering scenario control method, which simplifies a control mode and greatly reduces a quantity of calculation times of the weighting coefficients (for example, the complexity weighting coefficient of the vertex shader program, the primitive weighting coefficient, and the storage resource weighting coefficient) and a change frequency of the rendering mode.

For example, when the rendering scenario is a simple rendering scenario (for example, a screen post-processing scenario), it is determined to use the first rendering mode. When the rendering scenario is a complex rendering scenario, it is determined to use the second rendering mode.

Another solution for controlling rendering mode selection by using the rendering scenario control method is to predict rendering mode selection in a current rendering scenario by using a feature of the graphics application in a previous rendering scenario. When features of two adjacent rendering scenarios are not greatly different, predicting the rendering mode in the current rendering scenario by using the feature in the previous rendering scenario is a simple and effective solution.

The preset condition in this application is briefly described in (1) to (6). The preset condition may be further determined in the following several manners:
Manner 1:
determining, based on the series of primitives input by the graphics application, that the preset condition includes at least one of the following: the complexity weighting coefficient of the vertex shader program is greater than the second threshold, the primitive weighting coefficient is greater than the third threshold, and the storage resource weighting coefficient is greater than the fourth threshold.

The vertex shader program bound to the series of primitives is used to determine the complexity weighting coefficient of the vertex shader program. The primitive coverage and the quantity of bytes of the primitive vertex data in the series of primitives are used to determine the primitive weighting coefficient. The storage resource utilization of the GPU memory is used to determine the storage resource weighting coefficient.

Further, the rendering mode can be determined based on whether the preset condition is met.

When one specific series of primitives is input to the GPU by the graphics application, the vertex shader weighting coefficient for selecting the rendering mode may be calculated based on the vertex shader program bound to the series of primitives. Alternatively, the primitive geometric weighting coefficient for selecting the rendering mode may be calculated based on features of the primitive and the vertex data in the series of primitives.

In addition, for current GPU memory utilization, the storage resource weighting coefficient for selecting the rendering mode may be calculated. These weighting coefficients may be separately used to select an execution mode of the vertex shader in the series of primitives, or may be combined to select an execution mode of the vertex shader in the series of primitives.

For one specific series of primitives, a corresponding vertex shader program, primitive geometric feature, and available space of the GPU memory are known. The manner of selecting the rendering mode based on the series of primitives is simple and clear.

For ease of understanding, the method for determining the rendering mode based on the series of primitives input by the graphics application shown in the manner 1 is briefly described with reference to FIG. 6. FIG. 6 is a schematic flowchart of determining a rendering mode according to an embodiment of this application.

It can be learned from FIG. 6 that a manner of determining the rendering mode includes the following steps:
S610: Receive a series of primitives.
S621: Calculate a vertex shader weighting coefficient Rs based on the series of primitives.

Specifically, when one specific series of primitives is input to a GPU by the graphics application, a vertex shader weighting coefficient Rs may be calculated based on the vertex shader program bound to the series of primitives. S622: Calculate a primitive geometric weighting coefficient Rg based on the series of primitives.

Specifically, the primitive geometric weighting coefficient Rg may be calculated based on features of the primitive and vertex data in the series of primitives.

In addition, available storage space of the GPU memory is determined during rendering processing of each series of primitives. Therefore, a storage resource weighting coefficient of a current GPU memory for each series of primitives may be considered in selection of the rendering mode. The method procedure shown in FIG. 6 further includes: S623: Calculate a storage resource weighting coefficient Rm.

The storage resource weighting coefficient Rm may be calculated for current GPU memory utilization.

Further, the determining a rendering mode based on a preset condition (the foregoing calculated Rs, Rg, and Rm) includes the following steps:
S631: Determine whether a complexity weighting coefficient of the vertex shader program is greater than a second threshold (Ss).

If the vertex shader weighting coefficient Rs is less than a specific constant Ss, the second rendering mode is selected; if the vertex shader weighting coefficient Rs is not less than a specific constant Ss, step S632 is performed.

S632: Determine whether a primitive weighting coefficient is greater than the third threshold (Sg).

If the primitive geometric weighting coefficient Rg is less than a specific constant Sg, the second rendering mode is selected; if the primitive geometric weighting coefficient Rg is not less than a specific constant Sg, step S633 is performed.

S633: Determine whether the storage resource weighting coefficient is greater than a fourth threshold (Sm).

If the storage resource weighting coefficient Rm is less than a specific constant Sm, the second rendering mode is selected; if the storage resource weighting coefficient Rm is not less than a specific constant Sm, the first rendering mode is selected.

It should be noted that a same vertex shader program may be bound to different series of primitives. Therefore, the vertex shader weighting coefficient Rs generated in a compilation process of the vertex shader program may be stored, to avoid repeated calculation of the vertex shader weighting coefficient when another series of primitives bound to the vertex shader program is processed.

In the manner of selecting the rendering mode shown in FIG. 6, a feature of the vertex shader program, a geometric feature of the series of primitives, and a feature of GPU memory storage space are comprehensively considered. This is only used as an example for description, and does not constitute any limitation on the protection scope of this application. The rendering mode may further be selected in another manner. For example, without considering the feature of GPU memory storage space and/or the geometric feature of the series of primitives, if the vertex shader weighting coefficient Rs is less than the specific constant Ss, the second rendering mode is selected; if the vertex shader weighting coefficient Rs is not less than the specific constant Ss, the first rendering mode is selected. Examples are not provided for description herein one by one.

Manner 2:
determining, based on the vertex shader program input by the graphics application, that the preset condition includes that the complexity weighting coefficient of the vertex shader program is greater than the second threshold. According to a vertex shader control method for selecting the rendering mode provided in this application, the vertex shader program defined by the graphics application is used as a granularity to control selection of the rendering mode. When one specific vertex shader program is input to the GPU by the graphics application, the vertex shader weighting coefficient for selecting the rendering mode may be calculated based on compilation of the vertex shader program.

For one specific vertex shader program, a corresponding quantity of program instructions and feature are known.

A same vertex shader program may be bound to a plurality of series of primitives. Therefore, compared with the foregoing manner 1, the manner of selecting the rendering mode by using the vertex shader control method can make full use of a feature of the vertex shader program to select an appropriate rendering mode, reduce calculation of the weighting coefficients (for example, the foregoing primitive geometric weighting coefficient Rg and storage resource weighting coefficient Rm), and reduce a rendering mode change that may be caused (for example, a rendering mode change that is caused when each of the foregoing primitive geometric weighting coefficient Rg and storage resource weighting coefficient Rm does not meet a condition).

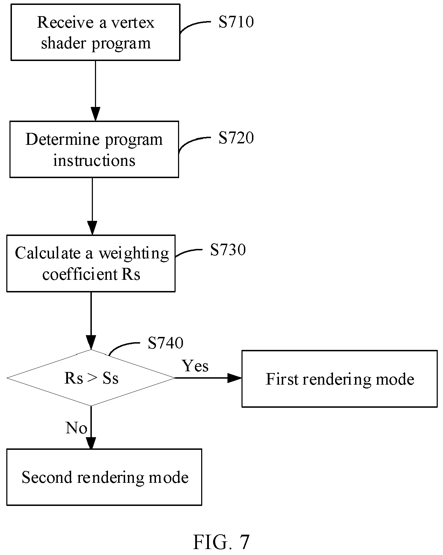

For ease of understanding, the method for determining the rendering mode based on the series of primitives input by the graphics application shown in the manner 2 is briefly described with reference to FIG. 7. FIG. 7 is another schematic flowchart of determining a rendering mode according to an embodiment of this application.

It can be learned from FIG. 7 that a manner of determining the rendering mode includes the following steps:
S710: Receive a vertex shader program.
S720: Determine program instructions.

Further, a quantity of program instructions may be determined based on the program instructions.

Specifically, for one specific vertex shader program, in a compilation process of the vertex shader program, a parameter indicating a feature of the vertex shader program may be obtained, for example, a quantity of instructions, a quantity of complex instructions, a quantity of memory read instructions, and a quantity of loop instructions of the vertex shader program.

Further, a vertex shader weighting coefficient Rs is calculated based on the quantity of instructions. The method procedure shown in FIG. 7 further includes:
S730: Calculate the vertex shader weighting coefficient Rs.

Specifically, the vertex shader program weighting coefficient Rs for selecting the rendering mode may be determined based on the foregoing vertex shader weighting method and the feature parameter of the vertex shader program. Further, the determining a rendering mode based on a preset condition (the foregoing calculated Rs) includes the following steps:
S740: Determine whether a complexity weighting coefficient of the vertex shader program is greater than a second threshold (Ss).

If the vertex shader weighting coefficient Rs is less than a specific constant Ss, the second rendering mode is selected; if the vertex shader weighting coefficient Rs is not less than a specific constant Ss, the first rendering mode is selected. After a corresponding rendering mode is selected for a specific vertex shader program, the execution mode is applied to rendering processes of all series of primitives bound to the vertex shader program.

The embodiment shown in FIG. 7 can effectively utilize the features of the vertex shader program to select the rendering mode. This improves execution efficiency of the vertex shader and improves effective utilization of the GPU memory.

Further, in this embodiment of this application, the vertex shader may use a segmented output manner: The vertex shader may be compiled into two independent programs: one vertex shader program specially used to generate the primitive vertex position data, and the other vertex shader program used to generate the primitive vertex attribute data. It should be understood that, in the geometry processing stage of the GPU, the vertex shader generates the primitive vertex data by executing the vertex shader program provided by the graphics application, including the vertex position data and attribute data, and further determines a shape and a position relationship of a three-dimensional graphic. In the geometry processing stage in the tile-based rendering process of the GPU shown in FIG. 3 or FIG. 4, for a primitive on which vertex shader processing, and projection and screen mapping processing are performed, a primitive that is invisible on the screen is further removed through a primitive removal stage. Therefore, a total quantity of primitives finally output in the geometry processing stage is less than a quantity of primitives processed by the vertex shader. The position data is fixed, but an amount of vertex attribute data is not fixed. The amount of vertex attribute data is usually far greater than an amount of vertex position data. In the primitive removal stage, the primitive vertex position data and an extremely small amount of special primitive vertex attribute data related to primitive removal are required. Based on this feature, the vertex shader program provided by the graphics application may be compiled into two independent vertex shader programs: one vertex shader program used to generate the primitive vertex position data, and the other vertex shader program used to generate the primitive vertex attribute data.

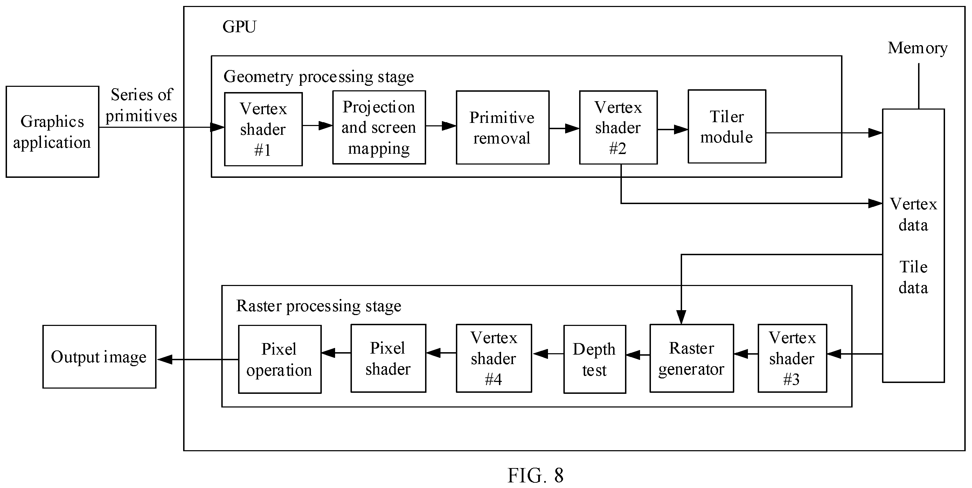

It should be noted that, both the quantity of instructions in the vertex shader program that generates the primitive vertex position data and amount of input and output data for executing the program usually reduce. The program is relatively simple. Therefore, this simplified vertex shader program is used in a rendering process in a stage requiring the primitive vertex position data. This can reduce a computation amount and improve performance of a GPU system. For ease of understanding, the following describes the segmented output manner of the vertex shader in an embodiment of this application with reference to FIG. 8. FIG. 8 is a schematic block diagram of the GPU system according to an embodiment of this application.

For example, in the first rendering mode, the primitive vertex position data is generated based on a first vertex shader in the geometry processing stage, where the primitive vertex position data is used to remove the primitive that is invisible on the screen; and primitive vertex attribute data corresponding to the primitive that is visible on the screen is generated based on a second vertex shader.

For example, as shown in FIG. 8, in the geometry processing stage, a vertex shader #1 executes the vertex shader program that generates the primitive vertex position data. The primitive vertex position data generated by the vertex shader #1 is used in a subsequent process to remove the primitive that is invisible on the screen. A primitive that is not removed executes the vertex shader program that generates the primitive vertex attribute data by using a vertex shader #2, to generate the primitive vertex attribute data.

In this way, the segmented output mode of the vertex shader may be applied to the first rendering mode, and the vertex shader program with a large computation amount that generates the primitive vertex attribute data is executed on a vertex of a primitive obtained after removal. This further reduces the computation amount of the vertex shader and improves the performance of the GPU system.

Specifically, in the first rendering mode, a primitive generates the primitive vertex data by using the vertex shader #1 and the vertex shader #2 shown in FIG. 8 in the geometry processing stage. After screen projection and primitive removal processing, the primitive vertex data is used by a tiler to distribute primitives into different tiles on the screen. In addition, after primitive removal, the primitive vertex data is stored in the GPU memory. In a raster processing stage, the primitive vertex data required for primitive rendering is read from the GPU memory, and therefore does not need to be processed by a vertex shader #3 and a vertex shader #4 (in the first mode, the vertex shader #3 and the vertex shader #4 may not exist). In this first rendering mode, the vertex shader program may be compiled into a program for generating the vertex position data and a program for generating the vertex attribute data. As shown in FIG. 8, the vertex shader #1 executes a simplified vertex shader program to generate the vertex position data, reducing the amount of computation. After primitive removal, a primitive generates the vertex attribute data by using the vertex shader #2. The vertex shader program that generates the vertex attribute data needs to process the remaining primitive. Therefore, the computation amount of the vertex shader is further reduced, and the performance of the GPU system is improved.

For example, in a second rendering stage, primitive vertex position data is generated based on a third vertex shader the raster processing stage, where the primitive vertex position data is used to remove a primitive that is invisible on a screen; and primitive vertex attribute data corresponding to a primitive that is visible on the screen is generated based on a fourth vertex shader.

Similar to configuration of the vertex shader in the geometry processing stage, for the second rendering mode, the vertex shader #3 in the raster processing stage in FIG. 8 executes a vertex shader program with a less computation amount that generates the primitive vertex position data. The primitive vertex position data generated by the vertex shader #3 is used to rasterize the primitive in a subsequent process and perform a depth test, to remove the primitive that is invisible on the screen. In a depth test stage, some blocked primitives are removed, and a primitive that is not removed executes the vertex shader program that generates the primitive vertex attribute data by using the vertex shader #4, to generate the primitive vertex attribute data required by the pixel shader in a subsequent process.

In this way, in the segmented output mode of the vertex shader, the vertex shader program with a large computation amount that generates the primitive vertex attribute data is executed on a primitive vertex obtained after the depth test. This further reduces the computation amount of repeated execution of the vertex shader and improves the performance of the GPU system.

Specifically, in the second rendering mode, the primitive generates the primitive vertex data by executing the vertex shader #1 in FIG. 8 in the geometry processing stage. After screen projection and primitive removal processing, the primitive vertex data is used by the tiler to distribute primitives into different tiles on the screen. The primitive vertex data generated by using the vertex shader #1 is not stored in the GPU memory. The primitive vertex position data is required in the geometry processing stage. Therefore, in the second rendering mode, the vertex shader #1 needs only to execute the simplified vertex shader program to generate the vertex position data, and does not need to be processed by the vertex shader #2 (the vertex shader #2 may not exist in the first mode). In the raster processing stage, the primitive vertex data required for primitive rendering is generated by the primitive through repeated execution of the vertex shader #3. In the second rendering mode, the vertex shader program that generates the vertex attribute data may be postponed and executed in the vertex shader #4 after the depth test in the raster processing stage. The vertex shader #3 executes the simplified vertex shader program to generate the vertex position data, which is used in a raster generator and the depth test.

It should be noted that this embodiment of this application mainly uses an example in which the rendering mode supported by the tile-based rendering system of the GPU includes the first rendering mode and the second rendering mode for description. This does not constitute any limitation on the protection scope of this application. The rendering mode supported by the tile-based rendering system of the GPU may alternatively be another rendering mode. For example, in another rendering mode provided in this application, the vertex position data generated by the vertex shader is stored in the GPU memory. Similar to the first rendering mode, in the tile-based rendering system shown in FIG. 8, after screen projection and primitive removal, the vertex position data generated by the vertex shader #1 is used by the tiler to distribute primitives into different tiles on the screen. In addition, after primitive removal, the vertex position data is stored in the GPU memory. In this mode, the vertex attribute data is not stored in GPU memory. Therefore, the vertex shader #2 is not required. The vertex position data stored in the GPU memory in the raster processing stage is read, and is used for raster generation and depth test processing of the primitive, without be processed by the vertex shader #3. After the depth test, the primitive generates the vertex attribute data required for rendering by using the vertex shader #4. Compared with the first rendering mode, this rendering mode reduces memory space and bandwidth for storing the vertex data. In addition, the second rendering mode reduces a workload of repeated execution of the vertex shader. In addition, because space required for storing the vertex position data is fixed, it is more convenient to manage GPU memory storage space.

In this embodiment of this application, the rending mode is selected based on the preset condition for rendering, to avoid impact on GPU rendering performance caused by rendering based on a fixed mode.

It should be noted that the foregoing example description is only intended to help a person skilled in the art understand embodiments of this application, instead of limiting embodiments of this application to the illustrated specific value or specific scenario. A person skilled in the art definitely can make various equivalent modifications or changes based on the examples described above, and such modifications or changes also fall within the scope of embodiments of this application.

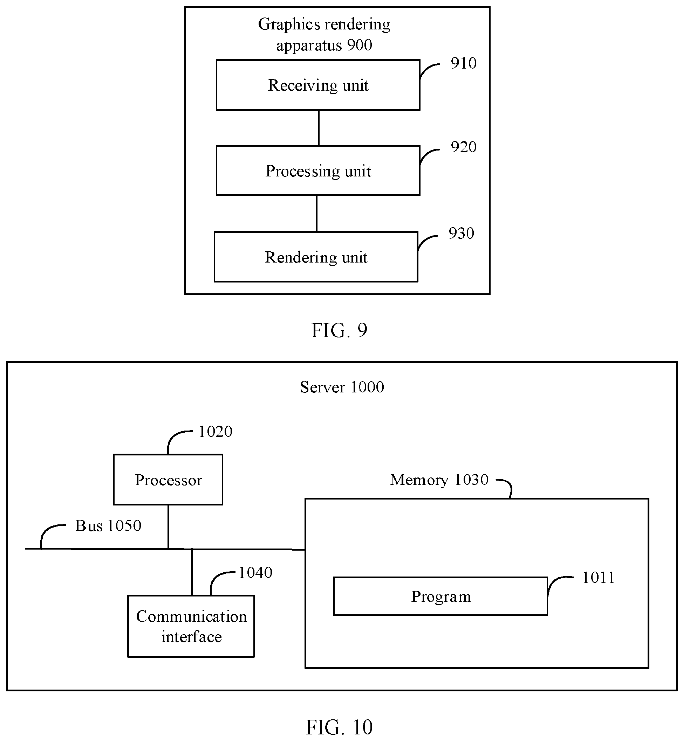

The foregoing describes in detail the graphics rendering method provided in this embodiment of this application with reference to FIG. 5 to FIG. 8. The following describes in detail apparatus embodiments of this application with reference to FIG. 9 to FIG. 10. It should be understood that a graphics rendering apparatus in an embodiment of this application may perform the methods in the foregoing embodiments of this application, that is, for specific working processes of the following various products, refer to corresponding processes in the foregoing method embodiments. FIG. 9 is a schematic block diagram of a graphics rendering apparatus 900 according to an embodiment of this application. It should be understood that the apparatus 900 can perform the steps in the methods in FIG. 5 to FIG. 8. To avoid repetition, details are not described herein again. The graphics rendering apparatus 900 may be an electronic device, or the graphics rendering apparatus 900 may be a chip configured in an electronic device. The graphics rendering apparatus 900 includes:
a receiving unit 910, a processing unit 920, and a rendering unit 930.

The receiving unit 910 is configured to receive a series of primitives from a graphics application.

The processing unit 920 is configured to determine, based on a preset condition, to perform graphics rendering and render the series of primitives by using the first rendering mode and/or the second rendering mode.

The rendering unit 930 is configured to render the series of primitives based on the first rendering mode and/or the second rendering mode.

The first rendering mode indicates to store, in a GPU memory, primitive vertex data generated by performing vertex shading processing on the series of primitives in a geometry processing stage, and read the primitive vertex data from the GPU memory in a raster processing stage to perform rendering processing.

The second rendering mode indicates that the primitive vertex data generated by performing vertex shading processing on the series of primitives in the geometry processing stage is not stored in the GPU memory, vertex shading processing is performed on the series of primitives in the raster processing stage to generate the primitive vertex data, and rendering processing is performed on the primitive vertex data.

It should be understood that the graphics rendering apparatus 900 herein is implemented in a form of a functional unit. The term "unit" herein may be implemented in a form of software and/or hardware. This is not specifically limited. For example, the "unit" may be a software program, a hardware circuit, or a combination thereof for implementing the foregoing function. The hardware circuit may include an application-specific integrated circuit (application-specific integrated circuit, ASIC), an electronic circuit, a processor (for example, a shared processor, a dedicated processor, or a group processor) configured to execute one or more software or firmware programs, a memory, a merged logic circuit, and/or another appropriate component that supports the described function.

Therefore, the units in the example described in this embodiment of this application can be implemented by electronic hardware, or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

FIG. 10 is a schematic block diagram of a server 1000 according to an embodiment of this application. The server 1000 includes a processor 1020, a memory 1030, a communication interface 1040, and a bus 1050. The processor 1020, the memory 1030, and the communication interface 1040 perform communication by using the bus 1050, or may implement communication through another means such as wireless transmission. The memory 1030 is configured to store instructions, and the processor 1020 is configured to execute the instructions stored in the memory 1030. The memory 1030 stores program code 1011, and the processor 1020 may invoke the program code 1011 stored in the memory 1030 to perform the graphics rendering method shown in FIG. 5 to FIG. 8.

The memory 1030 may include a read-only memory and a random access memory and provide an instruction and data to the processor 1020. The memory 1030 may further include a nonvolatile random access memory. The memory 1030 may be a volatile memory or a nonvolatile memory, or may include both a volatile memory and a nonvolatile memory. The nonvolatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM), used as an external cache. Through an example but not limitative description, many forms of RAMs may be used, for example, a static random access memory (static RAM, SRAM), a dynamic random access memory (DRAM), a synchronous dynamic random access memory (SDRAM), a double data rate synchronous dynamic random access memory (DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM). In addition to a data bus, the bus 1050 may further include a power bus, a control bus, a status signal bus, and the like. However, for clarity of description, various buses are marked as the bus 1050 in FIG. 10.

In the server 1000 shown in FIG. 10, the processor 1020 may perform a step/function corresponding to the processing unit 920 shown in FIG. 9, and the communication interface 1040 may perform a step/function corresponding to the receiving unit 910 shown in FIG. 9.

It should be understood that the server 1000 shown in FIG. 10 can implement the processes performed by the devices in the method embodiments shown in FIG. 5 to FIG. 8. Operations and/or functions of the modules in the server 1000 are intended to implement corresponding procedures of the devices in the foregoing method embodiments. For details, refer to the descriptions in the foregoing method embodiments. To avoid repetition, a detailed description is appropriately omitted herein.

Terminologies such as "component", "module", and "system" used in this specification are used to indicate computer-related entities, hardware, firmware, combinations of hardware and software, software, or software being executed. For example, a component may be, but is not limited to, a process that runs on a processor, a processor, an object, an executable file, an execution thread, a program, and/or a computer. As illustrated by using figures, both a computing device and an application that runs on the computing device may be components. One or more components may reside in a process and/or an execution thread, and a component may be located on one computer and/or distributed between two or more computers. In addition, these components may be executed from various computer-readable media that store various data structures. For example, the components may communicate by using a local and/or remote process based on a signal having one or more data packets (for example, data from two components interacting with another component in a local system, a distributed system, and/or across a network such as internet interacting with another system by using the signal).

A person of ordinary skill in the art may be aware that, in combination with the examples described in embodiments disclosed in this specification, units and algorithm steps may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

In the several embodiments provided in this application, it should be understood that the disclosed system, apparatus, and method can be performed in other manners. For example, the described apparatus embodiment is only an example. For example, division into the units is only logical function division and may be other division in actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected based on actual requirements to implement the objectives of the solutions of embodiments.

In addition, functional units in embodiments of this application may be integrated into one processing unit, each of the units may exist alone physically, or two or more units are integrated into one unit.

When the functions are implemented in the form of a software functional unit and sold or used as an independent product, the functions may be stored in a computer-readable storage medium. Based on such an understanding, the technical solutions of this application essentially, or the part contributing to the conventional technology, or a part of the technical solutions may be implemented in a form of a software product. The computer software product is stored in a storage medium, and includes several instructions for indicating a computer device (which may be a personal computer, a server, a network device, or the like) to perform all or a part of the steps of the methods described in embodiments of this application. The foregoing storage medium includes any medium that can store program code, such as a USB flash drive, a removable hard disk, a read-only memory (Read-Only Memory, ROM), a random access memory (Random Access Memory, RAM), a magnetic disk, or an optical disc.

The foregoing descriptions are only specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A graphics rendering method, applied to a tile-based rendering system of a computer graphics processing unit, GPU, wherein a rendering mode supported by the tile-based rendering system of the GPU comprises a first rendering mode and a second rendering mode; and
the method comprises:
receiving (S510) a series of primitives from a graphics application;
determining (S520), based on a preset condition, to render the series of primitives by using the first rendering mode and/or the second rendering mode; and
rendering (S530) the series of primitives based on the first rendering mode and/or the second rendering mode, wherein
the first rendering mode indicates to store, in the GPU memory, primitive vertex data generated by performing vertex shading processing in a geometry processing stage, and read the primitive vertex data from the GPU memory in a raster processing stage to perform rendering processing; and
the second rendering mode indicates that the primitive vertex data generated by performing vertex shading processing in the geometry processing stage is not stored in the GPU memory, vertex shading processing is performed in the raster processing stage to generate the primitive vertex data, and rendering processing is performed on the primitive vertex data, wherein the preset condition comprises at least one of the following:
a proportionality constant is greater than a first threshold, a complexity weighting coefficient of a vertex shader program is greater than a second threshold, a primitive weighting coefficient is greater than a third threshold, a storage resource weighting coefficient is greater than a fourth threshold, or a comprehensive weighting coefficient is greater than a fifth threshold, wherein
the proportion constant is a ratio of a quantity of execution times of the first rendering mode to a quantity of execution times of the second rendering mode, the complexity weighting coefficient of the vertex shader program is a weighted value of the following parameters of the vertex shader program: a quantity of instructions, a quantity of complex instructions, a quantity of memory read instructions, and a quantity of executable loop instructions, the primitive weighting coefficient is a weighted value of primitive coverage and a quantity of bytes of the primitive vertex data, and the storage resource weighting coefficient is storage resource utilization of the GPU memory, and the comprehensive weighting coefficient is a weighting value of the proportionality constant, the complexity weighting coefficient of the vertex shader program, the primitive weighting coefficient, and the storage resource weighting coefficient.

2. The method according to claim 1, wherein the method further comprises:
determining, based on the series of primitives, that the preset condition comprises at least one of the following: the complexity weighting coefficient of the vertex shader program is greater than the second threshold, the primitive weighting coefficient is greater than the third threshold, or the storage resource weighting coefficient is greater than the fourth threshold, wherein
the vertex shader program bound to the series of primitives is used to determine the complexity weighting coefficient of the vertex shader program, the primitive coverage and the quantity of bytes of the primitive vertex data in the series of primitives are used to determine the primitive weighting coefficient, and the storage resource utilization of the GPU memory is used to determine the storage resource weighting coefficient.

3. The method according to claim 1, wherein the method further comprises:
receiving the vertex shader program from the graphics application; and
determining, based on the vertex shader program, that the preset condition comprises that the complexity weighting coefficient of the vertex shader program is greater than the second threshold.

4. The method according to claim 1, wherein the preset condition further comprises: a rendering scenario is a preset rendering scenario.

5. The method according to any one of claims 1 to 4, wherein in the first rendering mode, the method further comprises:
generating primitive vertex position data based on a first vertex shader in the geometry processing stage, wherein the primitive vertex position data is used to remove a primitive that is invisible on a screen; and
generating, based on a second vertex shader, primitive vertex attribute data corresponding to a primitive that is visible on the screen.

6. The method according to any one of claims 1 to 5, wherein in the second rendering mode, the method further comprises:
generating primitive vertex position data based on a third vertex shader in the raster processing stage, wherein the primitive vertex position data is used to remove a primitive that is invisible on the screen; and
generating, based on a fourth vertex shader, primitive vertex attribute data corresponding to a primitive that is visible on the screen.

7. A graphics rendering apparatus (900), used in a tile-based rendering system of a computer graphics processing unit GPU, wherein a rendering mode supported by the tile-based rendering system of the GPU comprise a first rendering mode and a second rendering mode; and
the apparatus (900) comprises:
a receiving unit (910), configured to receive a series of primitives from a graphics application;
a processing unit (920), configured to determine, based on a preset condition, to perform graphics rendering and render the series of primitives by using the first rendering mode and/or the second rendering mode; and
a rendering unit (930), configured to render the series of primitives based on the first rendering mode and/or the second rendering mode, wherein
the first rendering mode indicates to store, in the GPU memory, primitive vertex data generated by performing vertex shading processing in a geometry processing stage, and read the primitive vertex data from the GPU memory in a raster processing stage to perform rendering processing; and
the second rendering mode indicates that the primitive vertex data generated by performing vertex shading processing in the geometry processing stage is not stored in the GPU memory, vertex shading processing is performed in the raster processing stage to generate the primitive vertex data, and rendering processing is performed on the primitive vertex data, wherein the preset condition comprises at least one of the following:
a proportionality constant is greater than a first threshold, a complexity weighting coefficient of a vertex shader program is greater than a second threshold, a primitive weighting coefficient is greater than a third threshold, a storage resource weighting coefficient is greater than a fourth threshold, or a comprehensive weighting coefficient is greater than a fifth threshold, wherein
the proportion constant is a ratio of a quantity of execution times of the first rendering mode to a quantity of execution times of the second rendering mode, the complexity weighting coefficient of the vertex shader program is a weighted value of the following parameters of the vertex shader program: a quantity of instructions, a quantity of complex instructions, a quantity of memory read instructions, and a quantity of executable loop instructions, the primitive weighting coefficient is a weighted value of primitive coverage and a quantity of bytes of the primitive vertex data, and the storage resource weighting coefficient is storage resource utilization of the GPU memory, and the comprehensive weighting coefficient is a weighting value of the proportionality constant, the complexity weighting coefficient of the vertex shader program, the primitive weighting coefficient, and the storage resource weighting coefficient.

8. The apparatus (900) according to claim 7, wherein the processing unit (920) is further configured to:
determine, based on the series of primitives, that the preset condition comprises at least one of the following: the complexity weighting coefficient of the vertex shader program is greater than the second threshold, the primitive weighting coefficient is greater than the third threshold, or the storage resource weighting coefficient is greater than the fourth threshold, wherein
the vertex shader program bound to the series of primitives is used to determine the complexity weighting coefficient of the vertex shader program, the primitive coverage and the quantity of bytes of the primitive vertex data in the series of primitives are used to determine the primitive weighting coefficient, and the storage resource utilization of the GPU memory is used to determine the storage resource weighting coefficient.

9. The apparatus (900) according to claim 7, wherein
the receiving unit (910) is further configured to receive the vertex shader program from the graphics application; and
the processing unit (920) is further configured to determine, based on the vertex shader program, that the preset condition comprises that the complexity weighting coefficient of the vertex shader program is greater than the second threshold.

10. The apparatus (900) according to claim 7, wherein the preset condition further comprises: a rendering scenario is a preset rendering scenario.

11. The apparatus according (900) to any one of claims 7 to 10, wherein the tile-based rendering system of the GPU comprises:
a first vertex shader, a primitive removal module, and a second vertex shader, wherein
the first vertex shader is configured to generate primitive vertex position data in the geometry processing stage;
the primitive removal module is configured to remove, based on the primitive vertex position data, a primitive that is invisible on a screen; and
the second vertex shader is configured to generate primitive vertex attribute data corresponding to a primitive that is visible on the screen.

12. The apparatus (900) according to any one of claims 7 to 11, wherein the tile-based rendering system of the GPU comprises:
a third vertex shader, a raster generator, a depth test unit, and a fourth vertex shader, wherein
the third vertex shader is configured to generate primitive vertex position data in the raster processing stage;
the raster generator is configured to rasterize the primitive based on the primitive vertex position data;
the depth test unit is configured to remove, based on the primitive vertex position data, a primitive that is invisible on the screen; and
the fourth vertex shader is configured to generate primitive vertex attribute data corresponding to a primitive that is visible on the screen.

13. A chip system, comprising a processor, configured to invoke a computer program from a memory and run the computer program, so that an apparatus on which the chip system is installed is enabled to perform the method according to any one of claims 1 to 6.

14. A computer-readable storage medium, wherein the computer-readable storage medium stores a computer program; and when the computer program is run on a computer, the computer is enabled to perform the method according to any one of claims 1 to 6.

15. A computer program product comprising instructions, wherein when the computer program product comprising the instructions runs on a computer, the computer is enabled to perform the method according to any one of claims 1 to 6.

## Patentansprüche

1. Verfahren zur Grafikdarstellung, das auf ein kachelbasiertes Darstellungssystem einer Grafikverarbeitungseinheit, GPU, eines Computers angewandt wird, wobei ein Darstellungsmodus, der durch das kachelbasierte Darstellungssystem der GPU unterstützt wird, einen ersten Darstellungsmodus und einen zweiten Darstellungsmodus umfasst; und
das Verfahren Folgendes umfasst:
Empfangen (S510) einer Reihe von Primitiven von einer Grafikanwendung;
Bestimmen (S520), basierend auf einer voreingestellten Bedingung, die Reihe von Primitiven unter Verwendung des ersten Darstellungsmodus und/oder des zweiten Darstellungsmodus darzustellen; und
Darstellen (S530) der Reihe von Primitiven basierend auf dem ersten Darstellungsmodus und/oder dem zweiten Darstellungsmodus, wobei der erste Darstellungsmodus angibt, in dem GPU-Speicher Primitivvertexdaten zu speichern, die durch Durchführen einer Vertex-Shading-Verarbeitung in einer Geometrieverarbeitungsphase erzeugt werden, und die Primitivvertexdaten in einer Rasterverarbeitungsphase aus dem GPU-Speicher auszulesen, um eine Darstellungsverarbeitung durchzuführen; und
der zweite Darstellungsmodus angibt, dass die Primitivvertexdaten, die durch das Durchführen der Vertex-Shading-Verarbeitung in der Geometrieverarbeitungsphase erzeugt werden, nicht in dem GPU-Speicher gespeichert werden, die Vertex-Shading-Verarbeitung in der Rasterverarbeitungsphase durchgeführt wird, um die Primitivvertexdaten zu erzeugen, und die Darstellungsverarbeitung an den Primitivvertexdaten durchgeführt wird, wobei die voreingestellte Bedingung mindestens eines von Folgendem umfasst:
eine Proportionalitätskonstante ist größer als ein erster Schwellenwert, ein Komplexitätsgewichtungskoeffizient eines Vertex-Shader-Programms ist größer als ein zweiter Schwellenwert, ein Primitivgewichtungskoeffizient ist größer als ein dritter Schwellenwert, ein Speicherressourcengewichtungskoeffizient ist größer als ein vierter Schwellenwert oder ein umfassender Gewichtungskoeffizient ist größer als ein fünfter Schwellenwert, wobei
die Proportionskonstante ein Verhältnis einer Anzahl an Ausführungsmalen des ersten Darstellungsmodus zu einer Anzahl an Ausführungsmalen des zweiten Darstellungsmodus ist, der Komplexitätsgewichtungskoeffizient des Vertex-Shader-Programms ein gewichteter Wert der folgenden Parameter des Vertex-Shader-Programms ist: einer Anzahl an Anweisungen, einer Anzahl an komplexen Anweisungen, einer Anzahl an Speicherausleseanweisungen und einer Anzahl an ausführbaren Schleifenanweisungen, der Primitivgewichtungskoeffizient ein gewichteter Wert einer Primitivabdeckung und einer Anzahl an Bytes der Primitivvertexdaten ist und der Speicherressourcengewichtungskoeffizient eine Speicherressourcenverwendung des GPU-Speichers ist und der umfassende Gewichtungskoeffizient ein Gewichtungswert der Proportionalitätskonstante, des Komplexitätsgewichtungskoeffizienten des Vertex-Shader-Programms, des Primitivgewichtungskoeffizienten und des Speicherressourcengewichtungskoeffizienten ist.

2. Verfahren nach Anspruch 1, wobei das Verfahren ferner Folgendes umfasst:
Bestimmen, basierend auf der Reihe von Primitiven, dass die voreingestellte Bedingung mindestens eines von Folgendem umfasst:
der Komplexitätsgewichtungskoeffizient des Vertex-Shader-Programms ist größer als der zweite Schwellenwert, der Primitivgewichtungskoeffizient ist größer als der dritte Schwellenwert oder der Speicherressourcengewichtungskoeffizient ist größer als der vierte Schwellenwert, wobei
das Vertex-Shader-Programm, das an die Reihe von Primitiven gebunden ist, dazu verwendet wird, den Komplexitätsgewichtungskoeffizienten des Vertex-Shader-Programms zu bestimmen, die Primitivabdeckung und die Anzahl an Bytes der Primitivvertexdaten in der Reihe von Primitiven dazu verwendet werden, den Primitivgewichtungskoeffizienten zu bestimmen, und die Speicherressourcenverwendung des GPU-Speichers dazu verwendet wird, den Speicherressourcengewichtungskoeffizienten zu bestimmen.

3. Verfahren nach Anspruch 1, wobei das Verfahren ferner Folgendes umfasst:
Empfangen des Vertex-Shader-Programms von der Grafikanwendung; und Bestimmen, basierend auf dem Vertex-Shader-Programm, dass die voreingestellte Bedingung umfasst, dass der Komplexitätsgewichtungskoeffizient des Vertex-Shader-Programms größer als der zweite Schwellenwert ist.

4. Verfahren nach Anspruch 1, wobei die voreingestellte Bedingung ferner Folgendes umfasst: ein Darstellungsszenario ist ein voreingestelltes Darstellungsszenario.

5. Verfahren nach einem der Ansprüche 1 bis 4, wobei das Verfahren in dem ersten Darstellungsmodus ferner Folgendes umfasst:
Erzeugen von Primitivvertexpositionsdaten basierend auf einem ersten Vertex-Shader in der Geometrieverarbeitungsphase, wobei die Primitivvertexpositionsdaten dazu verwendet werden, ein Primitiv zu entfernen, das auf einem Bildschirm unsichtbar ist; und
Erzeugen, basierend auf einem zweiten Vertex-Shader, von Primitivvertexattributdaten, die einem Primitiv entsprechen, das auf dem Bildschirm sichtbar ist.

6. Verfahren nach einem der Ansprüche 1 bis 5, wobei das Verfahren in dem zweiten Darstellungsmodus ferner Folgendes umfasst:
Erzeugen von Primitivvertexpositionsdaten basierend auf einem dritten Vertex-Shader in der Rasterverarbeitungsphase, wobei die Primitivvertexpositionsdaten dazu verwendet werden, ein Primitiv zu entfernen, das auf dem Bildschirm unsichtbar ist; und
Erzeugen, basierend auf einem vierten Vertex-Shader, von Primitivvertexattributdaten, die einem Primitiv entsprechen, das auf dem Bildschirm sichtbar ist.

7. Vorrichtung (900) zur Grafikdarstellung, die in einem kachelbasierten Darstellungssystem einer Grafikverarbeitungseinheit, GPU, eines Computers verwendet wird, wobei ein Darstellungsmodus, der durch das kachelbasierte Darstellungssystem der GPU unterstützt wird, einen ersten Darstellungsmodus und einen zweiten Darstellungsmodus umfasst; und die Vorrichtung (900) Folgendes umfasst:
eine Empfangseinheit (910), die dazu konfiguriert ist, eine Reihe von Primitiven von einer Grafikanwendung zu empfangen;
eine Verarbeitungseinheit (920), die dazu konfiguriert ist, basierend auf einer voreingestellten Bedingung zu bestimmen, eine Grafikdarstellung durchzuführen und die Reihe von Primitiven unter Verwendung des ersten Darstellungsmodus und/oder des zweiten Darstellungsmodus darzustellen; und
eine Darstellungseinheit (930), die dazu konfiguriert ist, die Reihe von Primitiven basierend auf dem ersten Darstellungsmodus und/oder dem zweiten Darstellungsmodus darzustellen, wobei
der erste Darstellungsmodus angibt, in dem GPU-Speicher Primitivvertexdaten zu speichern, die durch Durchführen einer Vertex-Shading-Verarbeitung in einer Geometrieverarbeitungsphase erzeugt werden, und die Primitivvertexdaten in einer Rasterverarbeitungsphase aus dem GPU-Speicher auszulesen, um eine Darstellungsverarbeitung durchzuführen; und
der zweite Darstellungsmodus angibt, dass die Primitivvertexdaten, die durch das Durchführen der Vertex-Shading-Verarbeitung in der Geometrieverarbeitungsphase erzeugt werden, nicht in dem GPU-Speicher gespeichert werden, die Vertex-Shading-Verarbeitung in der Rasterverarbeitungsphase durchgeführt wird, um die Primitivvertexdaten zu erzeugen, und die Darstellungsverarbeitung an den Primitivvertexdaten durchgeführt wird, wobei die voreingestellte Bedingung mindestens eines von Folgendem umfasst:
eine Proportionalitätskonstante ist größer als ein erster Schwellenwert, ein Komplexitätsgewichtungskoeffizient eines Vertex-Shader-Programms ist größer als ein zweiter Schwellenwert, ein Primitivgewichtungskoeffizient ist größer als ein dritter Schwellenwert, ein Speicherressourcengewichtungskoeffizient ist größer als ein vierter Schwellenwert oder ein umfassender Gewichtungskoeffizient ist größer als ein fünfter Schwellenwert, wobei
die Proportionskonstante ein Verhältnis einer Anzahl an Ausführungsmalen des ersten Darstellungsmodus zu einer Anzahl an Ausführungsmalen des zweiten Darstellungsmodus ist, der Komplexitätsgewichtungskoeffizient des Vertex-Shader-Programms ein gewichteter Wert der folgenden Parameter des Vertex-Shader-Programms ist: einer Anzahl an Anweisungen, einer Anzahl an komplexen Anweisungen, einer Anzahl an Speicherausleseanweisungen und einer Anzahl an ausführbaren Schleifenanweisungen, der Primitivgewichtungskoeffizient ein gewichteter Wert einer Primitivabdeckung und einer Anzahl an Bytes der Primitivvertexdaten ist und der Speicherressourcengewichtungskoeffizient eine Speicherressourcenverwendung des GPU-Speichers ist und der umfassende Gewichtungskoeffizient ein Gewichtungswert der Proportionalitätskonstante, des Komplexitätsgewichtungskoeffizienten des Vertex-Shader-Programms, des Primitivgewichtungskoeffizienten und des Speicherressourcengewichtungskoeffizienten ist.

8. Vorrichtung (900) nach Anspruch 7, wobei die Verarbeitungseinheit (920) ferner zu Folgendem konfiguriert ist:
Bestimmen, basierend auf der Reihe von Primitiven, dass die voreingestellte Bedingung mindestens eines von Folgendem umfasst:
der Komplexitätsgewichtungskoeffizient des Vertex-Shader-Programms ist größer als der zweite Schwellenwert, der Primitivgewichtungskoeffizient ist größer als der dritte Schwellenwert oder der Speicherressourcengewichtungskoeffizient ist größer als der vierte Schwellenwert, wobei
das Vertex-Shader-Programm, das an die Reihe von Primitiven gebunden ist, dazu verwendet wird, den Komplexitätsgewichtungskoeffizienten des Vertex-Shader-Programms zu bestimmen, die Primitivabdeckung und die Anzahl an Bytes der Primitivvertexdaten in der Reihe von Primitiven dazu verwendet werden, den Primitivgewichtungskoeffizienten zu bestimmen, und die Speicherressourcenverwendung des GPU-Speichers dazu verwendet wird, den Speicherressourcengewichtungskoeffizienten zu bestimmen.

9. Vorrichtung (900) nach Anspruch 7, wobei
die Empfangseinheit (910) ferner dazu konfiguriert ist, das Vertex-Shader-Programm von der Grafikanwendung zu empfangen; und die Verarbeitungseinheit (920) ferner dazu konfiguriert ist, basierend auf dem Vertex-Shader-Programm zu bestimmen, dass die voreingestellte Bedingung umfasst, dass der Komplexitätsgewichtungskoeffizient des Vertex-Shader-Programms größer als der zweite Schwellenwert ist.

10. Vorrichtung (900) nach Anspruch 7, wobei die voreingestellte Bedingung ferner Folgendes umfasst: ein Darstellungsszenario ist ein voreingestelltes Darstellungsszenario.

11. Vorrichtung nach (900) einem der Ansprüche 7 bis 10, wobei das kachelbasierte Darstellungssystem der GPU Folgendes umfasst:
einen ersten Vertex-Shader, ein Primitiventfernungsmodul und einen zweiten Vertex-Shader, wobei
der erste Vertex-Shader dazu konfiguriert ist, Primitivvertexpositionsdaten in der Geometrieverarbeitungsphase zu erzeugen;
das Primitiventfernungsmodul dazu konfiguriert ist, basierend auf den Primitivvertexpositionsdaten ein Primitiv zu entfernen, das auf einem Bildschirm unsichtbar ist; und
der zweite Vertex-Shader dazu konfiguriert ist, Primitivvertexattributdaten zu erzeugen, die einem Primitiv entsprechen, das auf dem Bildschirm sichtbar ist.

12. Vorrichtung (900) nach einem der Ansprüche 7 bis 11, wobei das kachelbasierte Darstellungssystem der GPU Folgendes umfasst:
einen dritten Vertex-Shader, einen Rastererzeuger, eine Tiefentesteinheit und einen vierten Vertex-Shader, wobei
der dritte Vertex-Shader dazu konfiguriert ist, Primitivvertexpositionsdaten in der Rasterverarbeitungsphase zu erzeugen;
der Rastererzeuger dazu konfiguriert ist, das Primitiv basierend auf den Primitivvertexpositionsdaten zu rastern;
die Tiefentesteinheit dazu konfiguriert ist, basierend auf den Primitivvertexpositionsdaten ein Primitiv zu entfernen, das auf dem Bildschirm unsichtbar ist; und
der vierte Vertex-Shader dazu konfiguriert ist, Primitivvertexattributdaten zu erzeugen, die einem Primitiv entsprechen, das auf dem Bildschirm sichtbar ist.

13. Chipsystem, umfassend einen Prozessor, der dazu konfiguriert ist, ein Computerprogramm aus einem Speicher abzurufen und das Computerprogramm auszuführen, sodass es einer Vorrichtung, auf der das Chipsystem installiert ist, ermöglicht wird, das Verfahren nach einem der Ansprüche 1 bis 6 durchzuführen.

14. Computerlesbares Speichermedium, wobei das computerlesbare Speichermedium ein Computerprogramm speichert; und, wenn das Computerprogramm auf einem Computer ausgeführt wird, es dem Computer ermöglicht wird, das Verfahren nach einem der Ansprüche 1 bis 6 durchzuführen.

15. Computerprogrammprodukt, umfassend Anweisungen, wobei, wenn das Computerprogrammprodukt, umfassend die Anweisungen, auf einem Computer läuft, es dem Computer ermöglicht wird, das Verfahren nach einem der Ansprüche 1 bis 6 durchzuführen.

## Revendications

1. Procédé de rendu graphique, appliqué à un système de rendu par tuiles d'une unité de traitement graphique, GPU, informatique, dans lequel un mode de rendu pris en charge par le système de rendu par tuiles de la GPU comprend un premier mode de rendu et un second mode de rendu ; et
le procédé comprend :
la réception (S510) d'une série de primitives provenant d'une application graphique ;
la détermination (S520), sur la base d'une condition prédéfinie, de rendre la série de primitives à l'aide du premier mode de rendu et/ou du second mode de rendu ; et
le rendu (S530) de la série de primitives sur la base du premier mode de rendu et/ou du second mode de rendu, dans lequel
le premier mode de rendu indique de stocker, dans la mémoire de la GPU, les données de sommets de primitives générées par la réalisation du traitement d'ombrage des sommets lors d'une étape de traitement géométrique, et de lire les données de sommets de primitives depuis la mémoire de la GPU lors d'une étape de traitement de raster pour réaliser le traitement du rendu ; et
le second mode de rendu indique que les données de sommets de primitives générées par la réalisation du traitement d'ombrage de sommets lors de l'étape de traitement géométrique ne sont pas stockées dans la mémoire de la GPU, que le traitement d'ombrage de sommets est réalisé lors de l'étape de traitement de raster pour générer les données de sommets de primitives, et que le traitement de rendu est réalisé sur les données de sommets de primitives, dans lequel la condition prédéfinie comprend au moins l'un des éléments suivants :
une constante de proportionnalité est supérieure à un premier seuil, un coefficient de pondération de complexité d'un programme nuanceur de sommets est supérieur à un deuxième seuil, un coefficient de pondération de primitive est supérieur à un troisième seuil, un coefficient de pondération de ressources de stockage est supérieur à un quatrième seuil, ou un coefficient de pondération global est supérieur à un cinquième seuil, dans lequel
la constante de proportionnalité est le rapport entre une quantité de temps d'exécution du premier mode de rendu et une quantité de temps d'exécution du second mode de rendu, le coefficient de pondération de complexité du programme nuanceur de sommets est une valeur pondérée des paramètres suivants du programme nuanceur de sommets : une quantité d'instructions, une quantité d'instructions complexes, une quantité d'instructions de lecture mémoire et une quantité d'instructions de boucle exécutables, le coefficient de pondération de primitive est une valeur pondérée de la couverture de primitive et une quantité d'octets des données de sommets de primitives, et le coefficient de pondération de ressources de stockage correspond à l'utilisation de ressources de stockage de la mémoire GPU, et le coefficient de pondération global est une valeur pondérée de la constante de proportionnalité, du coefficient de pondération de complexité du programme nuanceur de sommets, du coefficient de pondération de primitive et du coefficient de pondération de ressources de stockage.

2. Procédé selon la revendication 1, dans lequel le procédé comprend en outre :
le fait de déterminer, sur la base de la série de primitives, que la condition prédéfinie comprend au moins l'un des éléments suivants : le coefficient de pondération de complexité du programme nuanceur de sommets est supérieur au deuxième seuil, le coefficient de pondération de primitive est supérieur au troisième seuil, ou le coefficient de pondération de ressources de stockage est supérieur au quatrième seuil, dans lequel
le programme nuanceur de sommets lié à la série de primitives est utilisé pour déterminer le coefficient de pondération de complexité du programme nuanceur de sommets, la couverture de primitive et la quantité d'octets des données de sommets de primitives dans la série de primitives sont utilisées pour déterminer le coefficient de pondération de primitive, et l'utilisation de ressources de stockage de la mémoire GPU est utilisée pour déterminer le coefficient de pondération de ressources de stockage.

3. Procédé selon la revendication 1, dans lequel le procédé comprend en outre :
la réception du programme nuanceur de sommets provenant de l'application graphique ; et
le fait de déterminer, sur la base du programme nuanceur de sommets, que la condition prédéfinie comprend le fait que le coefficient de pondération de complexité du programme nuanceur de sommets est supérieur au deuxième seuil.

4. Procédé selon la revendication 1, dans lequel la condition prédéfinie comprend en outre : un scénario de rendu est un scénario de rendu prédéfini.

5. Procédé selon l'une quelconque des revendications 1 à 4, dans lequel, dans le premier mode de rendu, le procédé comprend en outre :
la génération de données de position de sommets de primitives sur la base d'un premier nuanceur de sommets lors de l'étape de traitement géométrique, dans lequel les données de position de sommets de primitives sont utilisées pour supprimer une primitive invisible à l'écran ; et
la génération, sur la base d'un deuxième nuanceur de sommets, de données d'attributs de sommets de primitives correspondant à une primitive visible à l'écran.

6. Procédé selon l'une quelconque des revendications 1 à 5, dans lequel, dans le second mode de rendu, le procédé comprend en outre :
la génération de données de position de sommets de primitives sur la base d'un troisième nuanceur de sommets lors de l'étape de traitement de raster, dans lequel les données de position de sommets de primitives sont utilisées pour supprimer une primitive invisible à l'écran ; et
la génération, sur la base d'un quatrième nuanceur de sommets, de données d'attribut de sommets de primitives correspondant à une primitive visible à l'écran.

7. Appareil de rendu graphique (900), utilisé dans un système de rendu par tuiles d'une unité de traitement graphique, GPU, informatique dans lequel un mode de rendu pris en charge par le système de rendu par tuiles de la GPU comprend un premier mode de rendu et un second mode de rendu ; et
l'appareil (900) comprend :
une unité de réception (910), configurée pour recevoir une série de primitives d'une application graphique ;
une unité de traitement (920), configurée pour déterminer, sur la base d'une condition prédéfinie, de réaliser le rendu graphique et de rendre la série de primitives à l'aide du premier mode de rendu et/ou du second mode de rendu ; et
une unité de rendu (930), configurée pour rendre la série de primitives sur la base du premier mode de rendu et/ou du second mode de rendu, dans lequel
le premier mode de rendu indique de stocker, dans la mémoire de la GPU, les données de sommets de primitives générées par la réalisation du traitement d'ombrage des sommets lors d'une étape de traitement géométrique, et de lire les données de sommets de primitives depuis la mémoire de la GPU lors d'une étape de traitement de raster pour réaliser le traitement du rendu ; et
le second mode de rendu indique que les données de sommets de primitives générées par la réalisation du traitement d'ombrage de sommets lors de l'étape de traitement géométrique ne sont pas stockées dans la mémoire de la GPU, que le traitement d'ombrage de sommets est réalisé lors de l'étape de traitement de raster pour générer les données de sommets de primitives, et que le traitement de rendu est réalisé sur les données de sommets de primitives, dans lequel la condition prédéfinie comprend au moins l'un des éléments suivants :
une constante de proportionnalité est supérieure à un premier seuil, un coefficient de pondération de complexité d'un programme nuanceur de sommets est supérieur à un deuxième seuil, un coefficient de pondération de primitive est supérieur à un troisième seuil, un coefficient de pondération de ressources de stockage est supérieur à un quatrième seuil, ou un coefficient de pondération global est supérieur à un cinquième seuil, dans lequel
la constante de proportionnalité est le rapport entre une quantité de temps d'exécution du premier mode de rendu et une quantité de temps d'exécution du second mode de rendu, le coefficient de pondération de complexité du programme nuanceur de sommets est une valeur pondérée des paramètres suivants du programme nuanceur de sommets : une quantité d'instructions, une quantité d'instructions complexes, une quantité d'instructions de lecture mémoire et une quantité d'instructions de boucle exécutables, le coefficient de pondération de primitive est une valeur pondérée de la couverture de primitive et une quantité d'octets des données de sommets de primitives, et le coefficient de pondération de ressources de stockage correspond à l'utilisation de ressources de stockage de la mémoire GPU, et le coefficient de pondération global est une valeur pondérée de la constante de proportionnalité, du coefficient de pondération de complexité du programme nuanceur de sommets, du coefficient de pondération de primitive et du coefficient de pondération de ressources de stockage.

8. Appareil (900) selon la revendication 7, dans lequel l'unité de traitement (920) est en outre configurée pour :
déterminer, sur la base de la série de primitives, que la condition prédéfinie comprend au moins l'un des éléments suivants : le coefficient de pondération de complexité du programme nuanceur de sommets est supérieur au deuxième seuil, le coefficient de pondération de primitive est supérieur au troisième seuil, ou le coefficient de pondération de ressources de stockage est supérieur au quatrième seuil, dans lequel
le programme nuanceur de sommets lié à la série de primitives est utilisé pour déterminer le coefficient de pondération de complexité du programme nuanceur de sommets, la couverture de primitive et la quantité d'octets des données de sommets de primitives dans la série de primitives sont utilisées pour déterminer le coefficient de pondération de primitive, et l'utilisation de ressources de stockage de la mémoire GPU est utilisée pour déterminer le coefficient de pondération de ressources de stockage.

9. Appareil (900) selon la revendication 7, dans lequel
l'unité de réception (910) est en outre configurée pour recevoir le programme nuanceur de sommets provenant de l'application graphique ; et
l'unité de traitement (920) est en outre configurée pour déterminer, sur la base du programme nuanceur de sommets, que la condition prédéfinie comprend le fait que le coefficient de pondération de complexité du programme nuanceur de sommets est supérieur au deuxième seuil.

10. Appareil (900) selon la revendication 7, dans lequel la condition prédéfinie comprend en outre : un scénario de rendu est un scénario de rendu prédéfini.

11. Appareil (900) selon l'une quelconque des revendications 7 à 10, dans lequel le système de rendu par tuiles de la GPU comprend :
un premier nuanceur de sommets, un module de suppression de primitive et un deuxième nuanceur de sommets, dans lequel le premier nuanceur de sommets est configuré pour générer des données de position de sommets de primitives lors de l'étape de traitement géométrique ;
le module de suppression de primitive est configuré pour supprimer, sur la base des données de position des sommets de primitives, une primitive invisible à l'écran ; et
le deuxième nuanceur de sommets est configuré pour générer des données d'attributs de sommets de primitives correspondant à une primitive visible à l'écran.

12. Appareil (900) selon l'une quelconque des revendications 7 à 11, dans lequel le système de rendu par tuiles de la GPU comprend :
un troisième nuanceur de sommets, un générateur de raster, une unité de test de profondeur et un quatrième nuanceur de sommets, dans lequel
le troisième nuanceur de sommets est configuré pour générer des données de position de sommets de primitives lors de l'étape de traitement de raster ;
le générateur de raster est configuré pour rastériser la primitive sur la base des données de position des sommets de primitives ;
l'unité de test de profondeur est configurée pour supprimer, sur la base des données de position de sommets de primitives, une primitive invisible à l'écran ; et
le quatrième nuanceur de sommets est configuré pour générer des données d'attributs de sommets de primitives correspondant à une primitive visible à l'écran.

13. Système de puce, comprenant un processeur, configuré pour invoquer un programme informatique provenant d'une mémoire et exécuter le programme informatique, de sorte à permettre à un appareil sur lequel le système de puce est installé de réaliser le procédé selon l'une quelconque des revendications 1 à 6.

14. Support de stockage lisible par ordinateur, dans lequel le support de stockage lisible par ordinateur stocke un programme informatique ; et lorsque le programme informatique est exécuté sur un ordinateur, l'ordinateur est en mesure de réaliser le procédé selon l'une quelconque des revendications 1 à 6.

15. Produit de programme informatique comprenant des instructions, dans lequel lorsque le produit de programme informatique comprenant les instructions est exécuté sur un ordinateur, l'ordinateur est en mesure de réaliser le procédé selon l'une quelconque des revendications 1 à 6.
